# EUROPÄISCHE PATENTSCHRIFT

(11) **EP 3 256 285 B1**
(45) Veröffentlichungstag und Bekanntmachung des Hinweises auf die Patenterteilung: **17.04.2019**
(21) Anmeldenummer: 16706552.3
(22) Anmeldetag: 10.02.2016
(51) Int. Cl.: B23K 26/073, B22F 3/105, B29C 67/00, B23K 26/342, B23K 26/082

(54) **BESTRAHLUNGSEINRICHTUNG, BEARBEITUNGSMASCHINE UND VERFAHREN ZUM HERSTELLEN EINER SCHICHT BZW. EINES TEILBEREICHS EINER SCHICHT EINES DREIDIMENSIONALEN BAUTEILS**
IRRADIATION APPARATUS, PROCESSING MACHINE AND METHOD FOR CREATING A LAYER OR A SECTION OF A LAYER OF A THREE-DIMENSIONAL COMPONENT
DISPOSITIF D'IRRADIATION, MACHINE DE TRAITEMENT ET PROCÉDÉ DE FABRICATION D'UNE COUCHE OU D'UNE SOUS-ZONE D'UNE COUCHE D'UNE PIÈCE TRIDIMENSIONNELLE

(30) Priorität: 10.02.2015 DE 102015202347
(43) Veröffentlichungstag der Anmeldung: 20.12.2017
(73) Patentinhaber: Trumpf Laser- und Systemtechnik GmbH, 71254 Ditzingen (DE)
(72) Erfinder: WÜST, Frank Peter, 71083 Herrenberg (DE); KÖNIG, Thomas, 75233 Tiefenbronn-Mühlhausen (DE); BUCHBINDER, Damien, 70839 Gerlingen (DE); WAGNER, Joachim, 70178 Stuttgart (DE); BAUER, Johannes, 75428 Illingen (DE)
(74) Vertreter: Kohler Schmid Möbus Patentanwälte
(86) Internationale Anmeldenummer: PCT/EP2016/052772
(87) Internationale Veröffentlichungsnummer: WO 2016/128430

(56) Entgegenhaltungen:
- JP-A- H02 142 690
- JP-A- S63 224 889
- JP-A- 2002 144 061
- US-A- 5 155 324
- US-A1- 2003 044 647
- US-A1- 2004 112 280
- US-A1- 2012 267 345
- US-B1- 6 426 840

## Beschreibung

Die vorliegende Erfindung betrifft eine Bestrahlungseinrichtung für eine Bearbeitungsmaschine zum Herstellen von dreidimensionalen Bauteilen durch Bestrahlen von Pulverschichten mittels eines Hochenergiestrahls, insbesondere mittels eines Laserstrahles gemäß dem Oberbegriff des Anspruchs 1 (siehe US 2012/267345 A). Die Erfindung betrifft auch eine Bearbeitungsmaschine mit einer solchen Bestrahlungseinrichtung (siehe Anspruch 13), sowie Verfahren zum Herstellen einer Schicht bzw. mindestens eines Teilbereichs einer Schicht eines dreidimensionalen Bauteils durch Bestrahlen einer Pulverschicht mittels eines Hochenergiestrahls, insbesondere mittels eines Laserstrahls gemäß dem Oberbegriff des Anspruchs 14 (siehe US 2012/267345 A).

Dreidimensionale Bauteile können durch so genannte generative Fertigungsverfahren (auch als Additive-Manufacturing-Verfahren bezeichnet) hergestellt werden. Bei derartigen Verfahren wird das dreidimensionale Bauteil schichtweise bzw. lagenweise generiert. Beim so genannten selektiven Laserschmelzen (engl. "selective laser melting", auch: SLM) und beim so genannten selektiven Lasersintern (engl. "selective laser sintering", auch: SLS) wird zu diesem Zweck ein Pulverwerkstoff lokal durch einen Hochenergiestrahl, insbesondere einen Laserstrahl, aufgeschmolzen, um eine Lage des dreidimensionalen Bauteils zu erzeugen.

Die EP 2 596 901 A1 beschreibt eine als Hülle-Kern-Strategie bezeichnete Vorgehensweise, bei der das zu generierende Bauteil virtuell in einen Hüllenbereich und in einen Kernbereich aufgeteilt wird. Bei der Generierung des Bauteils wird zunächst der Hüllenbereich mit einem Hochenergiestrahl bestrahlt, der ein vergleichsweise schmales und/oder gaußförmiges Strahlprofil aufweist, während im Anschluss daran der Kernbereich mit einem Hochenergiestrahl bestrahlt wird, der ein vergleichsweise breites und/oder homogenes Strahlprofil aufweist, so dass der Kernbereich schneller aufgeschmolzen werden kann als der Hüllenbereich. Für die Realisierung der Hülle-Kern-Strategie sind mindestens zwei unterschiedliche Strahlprofile erforderlich.

In der EP 2 596 901 A1 ist eine optische Bestrahlungsvorrichtung für eine Anlage zur Herstellung von dreidimensionalen Werkstücken bekannt geworden, welche zur Erzeugung eines ersten und eines zweiten, von dem ersten verschiedenen Strahlprofils ausgebildet ist, um bei der Herstellung eines dreidimensionalen Bauteils die Hülle-Kern-Strategie zu realisieren. Die optische Bestrahlungsvorrichtung weist eine Umschaltvorrichtung auf, die den eintretenden Lichtstrahl in einem ersten Lichtleitzustand ohne eine Veränderung des Strahlprofils zu einem Ausgangsanschluss leitet und die den eintretenden Lichtstrahl in einem zweiten Lichtleitzustand mittels einer Multimoden-Lichtleitfaser zu dem Ausgangsanschluss leitet, um das zweite, vom ersten verschiedene Strahlprofil zu erzeugen. Bei dem ersten Strahlprofil handelt es sich typischer Weise um ein gaußförmiges Strahlprofil. Aus der DE 199 53 000 A1 ist eine Vorrichtung zum schichtweisen Aufbau von Körpern bekannt geworden, bei der mehrere Strahlen zur schnellen Herstellung der Körper verwendet werden. Die schnelle Herstellung der Körper wird ähnlich wie in der EP 2 596 901 A1 dadurch erreicht, dass beim Sintern oder Verschweißen eines pulverförmigen Stoffes eine erste Strahlungsquelle zur Erzeugung von Konturen und eine zweite Strahlungsquelle zur schnellen Realisierung des Innenraums des zu erzeugenden Körpers verwendet werden. Die erste Strahlungsquelle soll zur Erzeugung der Konturen einen kleinen Fokus erzeugen. Die zweite Strahlungsquelle soll mehrere Schichten zwischen den erzeugten Konturen verschweißen oder versintern. Zu diesem Zweck kann die zweite Strahlungsquelle einen eindimensionalen Scanner zur Erzeugung eines Linienfokus aufweisen, der mittels einer XY-Positioniereinheit über den herzustellenden Körper bewegt wird. Bei einem anderen Ausführungsbeispiel ist die Strahlungsquelle zur Erzeugung einer flächenhaften Bestrahlung ausgebildet, wobei zwischen der zweiten Strahlungsquelle und dem Körper eine Maske angeordnet ist, die in ihrer Kontur veränderbar sein kann, um die Form der bestrahlten Fläche anzupassen.

Aus der DE 10 2013 003 063 T5 ist ein Verfahren zum Herstellen eines dreidimensionalen geformten Objekts bekannt geworden, bei dem durch Bestrahlen eines vorbestimmten Abschnitts einer Pulverschicht mit einem Lichtstrahl eine verfestigte Schicht erzeugt wird. In einem Beispiel ist ein anfänglicher Weg ein Weg entlang einer Kontur und nachfolgende Wege befinden sich innerhalb der Kontur, wobei jeder der nachfolgenden Wege an einen diesem vorangehenden Weg angrenzt, um das Material innerhalb der Pulverschicht zusammenzuschmelzen.

Aneinander angrenzende bzw. geringfügig seitlich überlappende Wege innerhalb der Kontur werden in der DE 10 2013 003 063 T5 typischer Weise in gegenläufiger Richtung mit dem Lichtstrahl bestrahlt. Hierbei tritt das Problem auf, dass das bestrahlte Pulvermaterial am Ende eines Weges heißer ist als das Pulvermaterial am Anfang eines nachfolgenden, angrenzenden Weges, der in gegenläufiger Richtung durchlaufen wird.

Ein weiteres Problem stellt gemäß der US4863538 die Tatsache dar, dass bei einem Verfahren zum selektiven Lasersintern, bei dem ein so genannter Raster-Scan zur Herstellung eines Bauteils verwendet wird, Bögen oder Linien, die nicht parallel zu den beiden Achsen des Rasters verlaufen, durch die Ränder der beleuchteten Fläche nur angenähert werden und somit nicht den Soll-Rändern entsprechen. Die Auflösung bei der Herstellung des Bauteils wird dadurch ggf. reduziert, wenn der Laserstrahl den Rand der Schicht des zu erzeugenden Bauteils bzw. den Rand der beleuchteten Fläche nicht in einem zusätzlichen Schritt im so genannten Vektormodus abfährt.

In der WO 2012/102655 A1 wird vorgeschlagen, den spezifischen Energieeintrag entlang eines Bestrahlungswegs zum Aufschmelzen einer Pulverschicht zu optimieren, indem beispielsweise die Geschwindigkeit des Strahls, die Leistung des Strahls oder ein Strahldurchmesser entlang des Bestrahlungswegs verändert werden. Für die Optimierung wird unter anderem eine Temperatur in der Pulverschicht entlang des Bestrahlungsweges berechnet, d.h. es erfolgt eine aufwändige Modellierung des Wärmeeintrags bzw. des Wärmeabflusses entlang des Bestrahlungsweges.

In der EP 1 568 472 A1 ist ein Verfahren zum Herstellen von Produkten beschrieben, die mittels eines hochenergetischen Strahls Schicht für Schicht aus einem Werkstoff aufgebaut werden. Der Strahl bestrahlt hierbei vorbestimmte Positionen einer Werkstoffschicht jeweils m-fach (m>1), wobei für jede dieser Positionen gilt, dass sie beim ersten Bestrahlen zunächst auf eine Temperatur unterhalb einer Schmelztemperatur des Werkstoffs erhitzt und beim m-ten Bestrahlen auf eine m-te Temperatur oberhalb dieser Schmelztemperatur erhitzt und dabei derart über die gesamte Schichtdicke hinweg aufgeschmolzen wird, dass sich der Werkstoff an dieser Position mit der darunter liegenden Schicht verbindet. Auch bei dem in der EP 1 568 472 A1 beschriebenen Verfahren besteht jedoch das Problem, dass sich in dem Material der Pulverschicht eine ungleichmäßige Temperaturverteilung einstellt.

### Aufgabe der Erfindung

Der Erfindung liegt die Aufgabe zugrunde, eine Bestrahlungseinrichtung, eine Bearbeitungsmaschine mit einer solchen Bestrahlungseinrichtung sowie zugehörige Verfahren anzugeben, mit denen eine besonders effiziente Herstellung eines dreidimensionalen Bauteils möglich ist.

### Gegenstand der Erfindung

Eine Bestrahlungseinrichtung gemäß der Erfindung ist im Anspruch 1 definiert.

Die Strahlformungseinrichtung ist ausgebildet, die Länge und die Breite des Strahlprofils zu verändern. Gemäß der Erfindung werden die beiden Abmessungen (Länge bzw. Breite) unabhängig voneinander (insbesondere kontinuierlich) verändert. Die Strahlformungseinrichtung kann ausgebildet sein, ein linienförmiges Strahlprofil zu erzeugen, d.h. ein Strahlprofil, dessen Länge deutlich größer ist als dessen Breite. Beispielsweise kann bei einem solchen linienförmigen Strahlprofil die Länge L mehr als zwanzig Mal, mehr als zehn Mal oder mehr als fünf Mal so groß sein wie die Breite B (L > 20 x B, L > 10 x B bzw. L > 5 x B).

Die Scannereinrichtung ist typischer Weise im Strahlweg des Hochenergiestrahls nach der Strahlformungseinrichtung angeordnet und dient dazu, den Hochenergiestrahl auf eine (einstellbare) Position in einem Bearbeitungsfeld der Scannereinrichtung auszurichten. Im Folgenden wird unter dem Bearbeitungsfeld ein zweidimensionaler Bereich (auch: Scanbereich) verstanden, in das der Hochenergiestrahl mittels einer Fokussiereinrichtung fokussiert wird. Der Hochenergiestrahl kann mittels der Scannereinrichtung auf jede beliebige Position innerhalb des Bearbeitungsfeldes ausgerichtet werden. Die Fokussiereinrichtung zur Fokussierung des Hochenergiestrahls in das Bearbeitungsfeld kann vor oder nach der Scannereinrichtung angeordnet sein. Das Bearbeitungsfeld kann insbesondere in einer Ebene verlaufen, in der eine Pulverschicht angeordnet ist, die mittels des Hochenergiestrahls bestrahlt werden soll. Idealer Weise bildet das Bearbeitungsfeld eine ebene Fläche, in der die zu bestrahlende Pulverschicht angeordnet ist. Gegebenenfalls kann das Bearbeitungsfeld insbesondere an seinen seitlichen Rändern geringfügig von einer planen Geometrie abweichen.

Bei herkömmlichen Bestrahlungseinrichtungen wird das Bearbeitungsfeld oder - bei der Anwendung des Hülle-Kern-Verfahrens - einer oder mehrere Teilbereiche des Bearbeitungsfeldes mit Hilfe einer Scannereinrichtung mäanderförmig entlang von mehreren Linien abgefahren, an deren Enden es jeweils zu einer Richtungsumkehr bei dem Scanprozess kommt. Die Richtungsumkehr erzeugt eine Verzögerung und erneute Beschleunigung von in der Scannereinrichtung vorgesehenen beweglichen Bauteilen, beispielsweise in Form von Scannerspiegeln, was zu Zeitverlusten beim Scanprozess führt und einen limitierenden Faktor für die Aufbaurate bei der Herstellung von dreidimensionalen Bauteilen darstellt.

Durch die Möglichkeit, das Strahlprofil des Hochenergiestrahls in Abhängigkeit von der Position des Hochenergiestrahls auf dem Bearbeitungsfeld zu verändern, kann die Fokusgeometrie des Hochenergiestrahls auf dem Bearbeitungsfeld an die Geometrie des herzustellenden dreidimensionalen Bauteils angepasst werden, ohne dass zu diesem Zweck zwei oder mehr optische Abbildungssysteme bzw. Laser erforderlich sind. Beispielsweise kann die Länge des Strahlprofils senkrecht zur momentanen Scanrichtung auf dem Bearbeitungsfeld an die Größe, beispielsweise an die Breite eines jeweils zu bestrahlenden flächenhaften Teilbereichs des Bearbeitungsfeldes angepasst werden. In diesem Fall ist es ggf. ausreichend, wenn der Hochenergiestrahl den zu bestrahlenden Teilbereich des Bearbeitungsfelds nur ein einziges Mal entlang einer vorgegebenen Bahnkurve abfährt, die von der Scannereinrichtung vorgegeben wird. Insbesondere kann die zu bestrahlende Fläche der jeweiligen Pulverschicht von einem Programmiersystem in Abhängigkeit von der Geometrie des herzustellenden Bauteils in mehrere streifenförmige Teilbereiche aufgeteilt werden, deren Streifenbreite typischer Weise nicht größer ist als die maximale Länge des Strahlprofils des Hochenergiestrahls in dem Bearbeitungsfeld. Ein jeweiliger streifenförmiger Teilbereich kann mittels des Hochenergiestrahls mit angepasster Länge (und ggf. angepasster Breite) des Strahlprofils ein einziges Mal entlang einer typischer Weise nicht mäanderförmigen Bahnkurve abgefahren werden, so dass auf ein mäanderförmiges Abrastern der zu bestrahlenden flächenhaften Teilbereiche des Bearbeitungsfeldes verzichtet werden kann. Die Scannereinrichtung dient somit nur noch zur Vorgabe der Bahnkurve, entlang derer der in seiner Geometrie bzw. in seinen Abmessungen veränderbare Hochenergiestrahl über das Bearbeitungsfeld bewegt wird, wobei die Bahnkurve typischer Weise dem Weg des Zentrums des in seiner Geometrie veränderlichen Strahlprofils des Hochenergiestrahls entspricht. Da keine schnelle Richtungsumkehr an den Rändern der mäanderförmigen Linien mehr erforderlich ist, kann für die Bestrahlung des Bauteils bzw. der Pulverschicht eine kostengünstige Scannereinrichtung verwendet werden, die weniger dynamisch arbeitet als dies bei herkömmlichen Bestrahlungseinrichtungen zum Herstellen von dreidimensionalen Bauteilen der Fall ist.

Gemäß der Erfindung weist die Strahlformungseinrichtung mindestens ein erstes einstellbares Strahlteleskop zur Veränderung der Länge des Strahlprofils auf. Durch die Veränderung der Länge des Strahlprofils kann beispielsweise die Abmessung des Laserstrahlfokus auf dem Bearbeitungsfeld in einer Richtung quer zu einer (momentanen) Scanrichtung, entlang derer der Laserstrahl mittels der Scannereinrichtung bewegt wird, verändert und an die Geometrie eines zu bestrahlenden Teilbereichs des Bestrahlungsfeldes angepasst werden. Das Strahlteleskop kann beispielsweise zwei oder mehr Zylinderlinsen aufweisen.

Gemäß der Erfindung weist die Strahlformungseinrichtung mindestens ein zweites einstellbares Strahlteleskop zur Veränderung der Breite des Strahlprofils, unabhängig von der Einstellung der Länge des Strahlprofils, auf. Zu diesem Zweck kann das zweite Strahlteleskop ebenfalls zwei oder mehr Zylinderlinsen aufweisen, deren Zylinderachse typischer Weise senkrecht zur Zylinderachse der Zylinderlinsen des ersten Strahlteleskops ausgerichtet sind. Die (ggf. zusätzliche) Veränderung der Breite des Strahlprofils kann beispielsweise günstig sein, um eine Vor- und/oder Nacherwärmung eines jeweils bestrahlten Teilbereichs der Pulverschicht zu erzeugen, wenn die Längsrichtung des Hochenergiestrahls quer zur momentanen Scanrichtung entlang der Bahn- bzw. Scankurve ausgerichtet ist.

Bei einer Weiterbildung weist/weisen mindestens ein erstes Strahlteleskop und/oder mindestens ein zweites Strahlteleskop eine in Richtung der Strahlachse des Hochenergiestrahls verschiebbare Linse, bevorzugt eine Zylinderlinse, auf. In der Regel weist ein jeweiliges Strahlteleskop typischer Weise mindestens eine, in der Regel mindestens zwei Zylinderlinsen auf, um das Strahlprofil in einer Richtung (und unabhängig von einer zweiten, zur ersten senkrechten Richtung) einstellen zu können. Mindestens eine der Zylinderlinsen kann in Strahlrichtung des Hochenergiestrahls verschiebbar ausgebildet sein, um die Länge oder die Breite des Strahlprofils zu verändern. Die Verschiebung der (Zylinder-)Linse kann mit Hilfe eines Aktors der Strahlformungseinrichtung in Abhängigkeit von der einzustellenden Länge bzw. Breite des Strahlprofils erfolgen. An Stelle von Zylinderlinsen können ggf. andere optische Komponenten in dem bzw. in den Strahlteleskop(en) verwendet werden, welche die gleiche oder eine ähnliche optische Wirkung aufweisen, beispielsweise reflektierende optische Elemente.

In einer weiteren Ausführungsform ist die Strahlformungseinrichtung zur Formung eines Strahlprofils des Hochenergiestrahls ausgebildet, dessen Länge mit dessen Breite übereinstimmt. Die Strahlformungseinrichtung ist in diesem Fall nicht nur ausgebildet, ein asymmetrisches Strahlprofil (Länge > Breite) zu erzeugen, sondern diese kann auch dazu dienen, ein symmetrisches Strahlprofil mit (im Wesentlichen) identischen Abmessungen in der ersten und in der zweiten Richtung zu erzeugen, wobei die Abmessungen in beiden Richtungen in diesem Fall typischer Weise sehr gering sind, so dass ein (annähernd) punktförmiges Strahlprofil erzeugt wird. Mittels eines Hochenergiestrahls mit einem solchen annähernd punktförmigen Strahlprofil können beispielsweise Konturen bzw. Konturlinien des herzustellenden dreidimensionalen Bauteils nachgefahren werden. Alternativ ist es möglich, zum Nachfahren der Konturlinien die Strahlformungseinrichtung, insbesondere das bzw. die Strahlteleskope, aus dem Strahlengang des Hochenergiestrahls zu entfernen. Auf diese Weise bleibt das typischer Weise symmetrische Strahlprofil, das von einer Laserquelle erzeugt wird und das bei geeigneter Auslegung ggf. auch an der Austrittsfläche einer Lichtleitfaser vorliegt, beim Durchtritt durch die Bestrahlungseinrichtung erhalten. Wird die Strahlformungseinrichtung aus dem Strahlengang des Hochenergiestrahls entfernt, ist es ggf. erforderlich, an Stelle der Strahlformungseinrichtung eine zusätzliche Fokussieroptik im Strahlengang anzuordnen.

Bei einer Ausführungsform ist die Strahlformungseinrichtung ausgebildet, die Ausrichtung der ersten Richtung und der zweiten Richtung des Strahlprofils in einer Ebene senkrecht zur Strahlachse des Hochenergiestrahls in Abhängigkeit von der Position des Hochenergiestrahls in dem Bearbeitungsfeld zu verändern, insbesondere die erste und die zweite Richtung in der Ebene senkrecht zur Strahlachse des Hochenergiestrahls zu drehen. Durch die Drehung des (asymmetrischen) Strahlprofils in der Ebene senkrecht zur Strahlachse des Hochenergiestrahls kann die Ausrichtung des (fokussierten) Strahlprofils in dem Bearbeitungsfeld, welches durch die Scannereinrichtung definiert wird, verändert werden. Insbesondere kann das (asymmetrische) Strahlprofil des Laserstrahls in dem Bearbeitungsfeld gedreht werden, um erforderlichenfalls das Nachfahren von bestimmten Konturen des zu erzeugenden Bauteils zu erleichtern. Auch können falls dies gewünscht ist die erste und die zweite Richtung des Strahlprofils in Abhängigkeit von der momentanen Scanrichtung auf dem Bearbeitungsfeldes beispielsweise so gedreht werden, dass die Längsrichtung des Strahlprofils stets senkrecht zur Bahnkurve des Hochenergiestrahls entlang des Bearbeitungsfelds verläuft. Eine Drehung des Strahlprofils ist beispielsweise günstig, wenn Teilbereiche des Bearbeitungsfeldes mittels des Hochenergiestrahls bestrahlt werden sollen, die eine unterschiedliche Orientierung in dem Bearbeitungsfeld aufweisen, so dass diese typischer Weise entlang von Bahnkurven abgefahren werden, die ebenfalls unterschiedlich orientiert sind. Es versteht sich, dass ggf. simultan zur Drehung des Strahlprofils auch die Länge und/oder die Breite des Strahlprofils verändert werden kann/können, um eine gewünschte flächige Bestrahlung des Bearbeitungsfeldes bzw. eines jeweiligen Teilbereichs des Bearbeitungsfeldes zu erreichen.

Bei einer Weiterbildung ist/sind das mindestens eine erste Strahlteleskop und/oder das mindestens eine zweite Strahlteleskop um die Strahlachse des Hochenergiestrahls drehbar gelagert und die Bestrahlungseinrichtung weist mindestens einen Antrieb zur Drehung des mindestens einen ersten und/oder zweiten Strahlteleskops um die Strahlachse auf. Durch die Drehung des jeweiligen Strahlteleskops um die Strahlachse des Hochenergiestrahls kann die Ausrichtung des (asymmetrischen) Strahlprofils auf besonders einfache Weise verändert werden.

Bei einer weiteren Ausführungsform umfasst die Bestrahlungseinrichtung zusätzlich eine im Strahlweg des Hochenergiestrahls vor dem mindestens einen ersten und/oder zweiten Strahlteleskop angeordnete Kollimationseinrichtung zur Kollimation des Hochenergiestrahls. Die Kollimationseinrichtung kann eine insbesondere rotationssymmetrische Linse, beispielsweise eine Bikonvexlinse oder eine Plankonvexlinse, aufweisen, um den typischer Weise divergent auftreffenden Hochenergiestrahl zu kollimieren. Der Hochenergiestrahl kann beispielsweise divergent aus einem Faserende einer Faser austreten, in dem der Hochenergiestrahl, beispielsweise in Form eines Laserstrahls, geführt ist. Die Faser kann einen runden bzw. zylindrischen Querschnitt aufweisen, so dass der Hochenergiestrahl mit einem runden Strahlquerschnitt aus der Faser austritt, es ist aber auch möglich, dass die Faser einen z.B. rechteckigen Querschnitt aufweist, so dass der Hochenergiestrahl mit einem rechteckigen Strahlprofil aus der Faser austritt. Mit Hilfe des bzw. der Strahlteleskope kann die Länge und die Breite des Strahlprofils des Hochenergiestrahls verändert werden, beispielsweise kann aus einem runden Strahlquerschnitt nach der Kollimationseinrichtung ein elliptischer Strahlquerschnitt erzeugt werden, oder es kann das Aspektverhältnis (Länge : Breite) des rechteckigen Strahlprofils verändert werden.

Bei einer weiteren Ausführungsform weist die Strahlformungseinrichtung zur zusätzlichen Formung, insbesondere zur Aufteilung, des Strahlprofils mindestens ein weiteres optisches Element auf. Bei dem weiteren optischen Element für die zusätzliche Formung des Strahlprofils kann es sich beispielsweise um ein diffraktives optisches Element handeln. Das diffraktive optische Element kann beispielsweise in Form eines Beugungsgitters ausgebildet sein, es ist aber auch möglich, das diffraktive optische Element z.B. in der Art eines computergenerierten Hologramms oder dergleichen auszubilden. Ein diffraktives optisches Element ermöglicht es, aus dem Strahlprofil des auf dieses auftreffenden Hochenergiestrahls ein Strahlprofil mit einer grundsätzlich annähernd beliebigen Geometrie zu erzeugen. Beispielsweise kann das diffraktive optische Element dazu dienen, ein Strahlprofil mit einer rechteckigen Geometrie in ein Strahlprofil mit einer elliptischen Geometrie umzuwandeln, oder umgekehrt.

Bei dem weiteren optischen Element kann es sich um ein zusätzliches optisches Element der Strahlformungseinrichtung handeln. In diesem Fall kann das weitere optische Element ggf. in den Strahlengang des Hochenergiestrahls eingebracht oder aus diesem entfernt werden, je nachdem, ob die optische Wirkung des weiteren optischen Elements bei der Herstellung eines jeweiligen dreidimensionalen Bauteils bzw. einer oder mehrerer Schichten oder Teilbereichen von Schichten des dreidimensionalen Bauteils gewünscht ist oder nicht. Es ist auch möglich, dass ein optisches Element, z.B. eine Linse, welches ohnehin in der Strahlformungseinrichtung angeordnet ist, als weiteres, z.B. diffraktives optisches Element wirkt, beispielsweise die weiter oben beschriebene Kollimationslinse oder ein optisches Element, insbesondere eine Linse, des ersten und/oder des zweiten Strahlteleskops.

Alternativ oder zusätzlich zur Verwendung eines diffraktiven optischen Elements ist es möglich, eines oder mehrere weitere optische Elemente für die zusätzliche Strahlformung zu verwenden, welche(s) nur auf einzelne Profilbereiche des Strahlprofils optisch einwirkt/einwirken, beispielsweise um diese relativ zum restlichen Strahlprofil zu separieren, insbesondere lateral zu versetzen. Beispielsweise kann bzw. können mittels eines oder mehrerer keilförmiger optischer Elemente, die nur einen Teil des Strahlengangs überdecken, einer oder mehrere Profilbereiche des Strahlprofils von anderen Profilbereichen des Strahlprofils räumlich separiert werden, so dass das Strahlprofil in mehrere Profilbereiche aufgeteilt wird. Auf diese Weise kann ein Strahlprofil des Hochenergiestrahls erzeugt werden, welches z.B. entlang der zweiten Richtung, d.h. in seiner Breite, zwei- oder mehrgeteilt, beispielsweise dreigeteilt ist, d.h. ein Strahlprofil, das beispielsweise einen ersten Profilbereich, einen zweiten Profilbereich und einen dritten Profilbereich in der zweiten Richtung aufweist, die durch dazwischen liegende Profilbereiche getrennt sind, in denen das Strahlprofil nur eine sehr geringe Leistung aufweist. Eine solche Unterteilung des Strahlprofils insbesondere in der zweiten Richtung kann beispielsweise dazu dienen, eine Vorwärmung bzw. eine Nachwärmung des herzustellenden Bauteils bzw. der Pulverschicht zu erzeugen. In diesem Fall kann ggf. ein hoher Anteil, z.B. mehr als 70 %, der gesamten Leistung des Hochenergiestrahls auf den zweiten, mittleren Profilbereich entfallen. Sofern die Fläche des Teilbereichs des Strahlengangs, den das bzw. die weiteren optischen Element(e) überdecken, einstellbar ist, ist auch die Leistung des Hochenergiestrahls, die auf den ersten, zweiten sowie den dritten Profilbereich entfällt, jeweils einstellbar, um einen gewünschten Energieeintrag bei der Vorwärmung bzw. der Nachwärmung zu erhalten.

Bei einer weiteren Ausführungsform umfasst die Bestrahlungseinrichtung zusätzlich ein Objektiv, beispielsweise ein F/Theta-Objektiv, zur Fokussierung des Hochenergiestrahls bei der Ausrichtung auf die (jeweilige) Position in dem Bearbeitungsfeld der Scannereinrichtung. Ein solches Objektiv ist typischer Weise nach den in der Regel zwei beweglichen Scannerspiegeln der Scannereinrichtung angeordnet, welche dazu dienen, den Hochenergiestrahl auf eine beliebige Position in dem Bearbeitungsfeld auszurichten. Ein Objektiv ermöglicht es, den Hochenergiestrahl in einem (annähernd) ebenen Bearbeitungsfeld zu fokussieren, an dem typischer Weise die jeweils zu bestrahlende Pulverschicht angeordnet ist. Alternativ oder zusätzlich zur Fokussierung des Hochenergiestrahls nach der Scannereinrichtung z.B. mittels eines Objektivs ist es auch möglich, den Hochenergiestrahl mittels einer Fokussiereinrichtung, beispielsweise mittels einer oder mehrerer Linsen, zu fokussieren, die im Strahlweg vor der Scannereinrichtung angeordnet ist. In diesem Fall richtet die Scannereinrichtung an Stelle eines kollimierten Hochenergiestrahls einen konvergenten Hochenergiestrahl an eine jeweilige Position auf dem Bearbeitungsfeld aus.

Bei einer weiteren Ausführungsform weist die Bestrahlungseinrichtung eine Strahlquelle, insbesondere eine Laserquelle, zur Erzeugung des Hochenergiestrahls auf. Die Strahlquelle kann beispielsweise als CO₂-Laser, als Nd:YAG-Laser, als Faser-Laser oder als Hochleistungsdioden-Laser ausgebildet sein, der idealer Weise einen Laserstrahl mit einer Leistung von mehr als 50 W, ggf. von mehreren kW erzeugt. Zur Führung des Laserstrahls von der Strahlquelle zur Strahlformungseinrichtung kann beispielsweise eine Lichtleitfaser dienen. An Stelle einer Laserquelle können auch andere Strahlquellen zur Erzeugung elektromagnetischer Strahlung bzw. eines Hochenergiestrahls verwendet werden, der eine Leistung von typischer Weise mindestens 50 W aufweist. Die momentane Leistung, die von der Strahlquelle abgegeben wird, kann ebenfalls in Abhängigkeit von der Position des Hochenergiestrahls in dem Bearbeitungsfeld und somit in Abhängigkeit von der momentanen Länge und/oder Breite des Strahlprofils verändert bzw. angepasst werden, beispielsweise mit Hilfe einer weiter unten näher beschriebenen Steuerungseinrichtung. Hierbei kann die Flächenleistung, welche von der momentanen Laserleistung und der momentanen Länge und Breite des Strahlprofils abhängt, mit der Vorschubgeschwindigkeit gekoppelt werden, um die Volumenaufschmelzleistung konstant bzw. stabil zu halten und auf diese Weise einen sicheren Aufschmelzprozess bzw. einen sicheren Schweißprozess zu gewährleisten.

Bei einer weiteren Ausführungsform weist die Bestrahlungseinrichtung eine Steuerungseinrichtung auf, welche ausgebildet bzw. programmiert ist, die Strahlformungseinrichtung zur Steuerung der Länge und/oder der Breite des Strahlprofils und bevorzugt der Ausrichtung der ersten Richtung und der zweiten Richtung des Strahlprofils (relativ zum Bearbeitungsfeld) in Abhängigkeit von der Position des Hochenergiestrahls in dem Bearbeitungsfeld anzusteuern. Mit Hilfe der Steuerungseinrichtung kann das Strahlprofil des Hochenergiestrahls in Abhängigkeit von der Position des Hochenergiestrahls in dem Bearbeitungsfeld dynamisch eingestellt bzw. gesteuert werden. Die Steuerungseinrichtung greift zu diesem Zweck auf Daten über die (zweidimensionale) Geometrie des zu erzeugenden dreidimensionalen Bauteils an der jeweils zu bestrahlenden Pulverschicht zurück, die in einer Speichereinrichtung abgelegt sind bzw. die von einem Programmiersystem vorgegeben werden. Die Steuerungseinrichtung kann insbesondere das Bearbeitungsfeld in mehrere Teilbereiche unterteilen, die nacheinander mit dem Hochenergiestrahl bestrahlt werden.

Wird der Hochenergiestrahl, genauer gesagt dessen Zentrum, beispielsweise entlang eines Teilbereichs einer zu bestrahlenden Pulverschicht bewegt, wobei die zweite Richtung (d.h. die Breite) des Strahlprofils in Längsrichtung des Teilbereichs verläuft, kann an einer jeweiligen Position des Bearbeitungsfeldes die Länge des Strahlprofils so angepasst werden, dass diese der Breite des Teilbereichs an der jeweiligen Position entspricht. Auf diese Weise kann ein solcher Teilbereich vollständig bestrahlt werden, obwohl der Hochenergiestrahl lediglich ein einziges Mal in Längsrichtung über den Teilbereich geführt wird. Insbesondere wenn in einem jeweiligen Teilbereich ein Flächenbereich vorhanden ist, der nicht bestrahlt werden soll, kann es vorteilhaft sein, die Breite und/oder die Ausrichtung des Hochenergiestrahls zu verändern.

Bei einer Weiterbildung ist die Steuerungseinrichtung ausgebildet, die Strahlformungseinrichtung anzusteuern, mindestens einen ersten zur Herstellung einer Schicht des dreidimensionalen Bauteils mittels des Hochenergiestrahls zu bestrahlenden ersten Teilbereich des Bearbeitungsfeldes mit einem Strahlprofil zu bestrahlen, dessen Länge größer ist als dessen Breite, und mindestens einen zweiten zur Herstellung derselben Schicht des dreidimensionalen Bauteils mittels des Hochenergiestrahls zu bestrahlenden zweiten Teilbereich des Bearbeitungsfelds mit einem Strahlprofil zu bestrahlen, dessen Länge und Breite (ungefähr) übereinstimmen. Wie weiter oben beschrieben wurde, ist die Steuerungseinrichtung ausgebildet, anhand der Geometrie des herzustellenden dreidimensionalen Bauteils zu bestrahlende Teilbereiche des Bearbeitungsfeldes (und damit der entsprechenden Pulverschicht) zu identifizieren, die nacheinander bestrahlt werden. Bei dem ersten Teilbereich kann es sich um einen Flächenbereich handeln, der zwischen den Konturen des herzustellenden Bauteils liegt, während es sich bei dem zweiten Teilbereich typischer Weise um einen Konturbereich bzw. eine Konturlinie des herzustellenden Bauteils handelt. Der zweite Teilbereich kann insbesondere bestrahlt werden, ohne dass hierbei das Strahlprofil des Hochenergiestrahls verändert wird. Für die Erzeugung des Strahlprofils, dessen Länge und Breite übereinstimmen, dient bevorzugt die geeignet eingestellte Strahlformungseinrichtung. Es ist aber alternativ auch möglich, die Strahlformungseinrichtung aus dem Strahlengang zu entfernen, um ein beispielsweise von einer Laserquelle erzeugtes symmetrisches Strahlprofil direkt auf das Bearbeitungsfeld zu übertragen. Die Reihenfolge der Bestrahlung der ersten und zweiten Teilbereiche ist grundsätzlich beliebig, d.h. die Bestrahlung eines oder mehrerer der ersten Teilbereiche kann vor oder nach der Bestrahlung eines oder mehrerer der zweiten Teilbereiche erfolgen. Auf diese Weise kann die weiter oben beschriebene Hülle-Kern-Strategie zur Herstellung eines dreidimensionalen Bauteils realisiert werden.

Insbesondere hat es sich als günstig erwiesen, wenn der erste und zweite Teilbereich ein- und derselben Pulverschicht auf die weiter oben beschriebene Weise bestrahlt werden, d.h. wenn auch die ersten, flächenhaften Teilbereiche jeder Pulverschicht einzeln aufgeschmolzen werden, so dass die Wärme abfließen bzw. sich verteilen kann, bis die nächste Pulverschicht aufgetragen und aufgeschmolzen wird, da sich hierdurch die Qualität des dreidimensionalen Bauteils erhöht. Im Gegensatz dazu kann ggf. bei dem in der DE 199 53 000 A1 beschriebenen Verfahren, bei dem mehrere Pulverschichten eines flächenhaften Teilbereichs (bzw. des Kerns) gemeinsam aufgeschmolzen werden, ein großes Schmelzvolumen mit sehr viel Wärmeenergie entstehen, wodurch sich das herzustellende Bauteil ggf. verzieht. Zudem beinhaltet das verwendete Pulvermaterial in der Regel Luft, so dass das Pulverbett beim gleichzeitigen Aufschmelzen von mehreren Schichten auf einmal zusammensackt und das Niveau der Schmelze auf dem Träger ggf. deutlich niedriger liegt als das Niveau der bereits hergestellten Hüllenkontur. Um dies zu kompensieren, ist es ggf. erforderlich, zusätzliche Pulverauftrags- und Aufschmelzvorgänge im Kern vorzunehmen, welche den Zeitvorteil durch das Aufschmelzen mehrerer Pulverschichten ggf. zumindest teilweise wieder zunichtemachen können. Es versteht sich aber, dass ggf. trotz der hier genannten Probleme mehrere übereinander liegende Pulverschichten im Bereich des Kerns (bzw. im Bereich von übereinander liegenden ersten Teilbereichen) gemeinsam bestrahlt werden können.

Ein weiterer Aspekt der Erfindung betrifft eine Bearbeitungsmaschine zur Herstellung von dreidimensionalen Bauteilen durch Bestrahlen von Pulverschichten mittels eines Hochenergiestrahls, insbesondere mittels eines Laserstrahls, umfassend: eine Bestrahlungseinrichtung wie weiter oben beschrieben, siehe Anspruch 13.

Die Erfindung betrifft auch ein Verfahren zum Herstellen einer Schicht eines dreidimensionalen Bauteils durch Bestrahlen einer Pulverschicht mittels eines Hochenergiestrahls, insbesondere mittels eines Laserstrahls, siehe Anspruch 14. ersten Pulverschicht) auf einen bereits fertig gestellten Teil des dreidimensionalen Bauteils aufgebracht wird. Das hier beschriebene Verfahren zum Herstellen einer Pulverschicht wird typischer Weise mehrmals hintereinander ausgeführt, bis das dreidimensionale Bauteil vollständig fertiggestellt ist.

Durch das hier beschriebene Verfahren kann eine besonders effiziente Bestrahlung der Pulverschicht erfolgen, wodurch die Aufbaurate bei der Herstellung des dreidimensionalen Bauteils erhöht werden kann. Insbesondere kann das Strahlprofil des Hochenergiestrahls stets so ausgerichtet werden, dass die erste Richtung des Strahlprofils senkrecht zur momentanen Bewegungsrichtung bzw. zur momentanen Richtung der Bahnkurve des Hochenergiestrahls in dem Bearbeitungsfeld verläuft. In diesem Fall kann durch die Variation der Breite des Strahlprofils in der zweiten Richtung, die mit der momentanen Richtung der Bahnkurve übereinstimmt, auf besonders einfache Weise ein Vor- bzw. ein Nachwärmen der bestrahlten Pulverschicht erfolgen. Die für den Herstellungsprozess erforderliche Wärme kann in diesem Fall besonders effektiv über den Hochenergiestrahl zugeführt werden, so dass ggf. auf das Zuführen von Wärme von unten (über den Träger) an die Pulverschicht verzichtet werden kann. Gegebenenfalls kann das Strahlprofil des Hochenergiestrahls in der zweiten Richtung z.B. dreigeteilt sein, d.h. die Breite des Strahlprofils weist einen ersten, zweiten und dritten Profilbereich auf, zwischen denen zwei Profilbereiche vorhanden sind, in denen das Strahlprofil keine bzw. nur eine verschwindend geringe Leistung aufweist. Auf diese Weise kann ggf. weniger Energie in das Bauteil bzw. in die Pulverschicht eingebracht werden als dies bei der Verwendung von herkömmlichen Verfahren der Fall ist, wodurch typischer Weise ein ggf. auftretender Verzug in dem Bauteil bei dessen Abkühlung reduziert werden kann. Grundsätzlich kann durch die linienförmige Bestrahlung mehr Energie auf einmal in das Pulverbett bzw. in die Pulverschicht eingebracht werden, als dies bei einer punktförmigen Bestrahlung der Fall ist, wodurch der Herstellungsprozess beschleunigt wird. Bei einer punktförmigen Bestrahlung der Pulverschicht ist die maximale pro Zeiteinheit eingebrachte Energie limitiert durch die Geschwindigkeit der Scannereinrichtung, da zu viel Wärmeeintrag an einer Stelle der Pulverschicht zu einem Verzug des Bauteils oder ggf. zu einer Verdampfung des Pulvermaterials führen kann.

Bei einer Variante wird die Pulverschicht in mindestens einem ersten Teilbereich mit einem ersten Strahlprofil bestrahlt, dessen Länge größer ist als dessen Breite und die Pulverschicht wird in mindestens einem zweiten Teilbereich mit einem zweiten Strahlprofil bestrahlt, dessen Länge und Breite übereinstimmen. Es versteht sich, dass die Länge und ggf. die Breite des ersten Strahlprofils während der Bestrahlung des ersten Teilbereichs variieren kann und dass die Ausrichtung des Strahlprofils während der Bestrahlung geändert, insbesondere gedreht werden kann. Während der Bestrahlung des zweiten Teilbereichs mit dem Hochenergiestrahl mit dem zweiten Strahlprofil wird das zweite Strahlprofil in der Regel nicht verändert, um die Konturen bzw. die Konturlinien des herzustellenden dreidimensionalen Bauteils nachfahren zu können.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine schematische Darstellung einer Bestrahlungseinrichtung mit einer Strahlformungseinrichtung, welche ein erstes einstellbares Strahlteleskop zur Veränderung der Länge eines Strahlprofils eines Laserstrahls aufweist,
- Fig. 2: eine Darstellung einer Bestrahlungseinrichtung analog Fig. 1, welche zusätzlich ein zweites einstellbares Strahlteleskop zur Veränderung der Breite des Strahlprofils aufweist,
- Fig. 3: eine Darstellung einer Bestrahlungseinrichtung analog Fig. 2, bei welcher das erste und zweite Strahlteleskop um eine Strahlachse des Laserstrahls drehbar gelagert sind, sowie
- Fig. 4: eine Darstellung einer Bearbeitungsmaschine zum Herstellen von dreidimensionalen Bauteilen, welche eine Bestrahlungseinrichtung entsprechend Fig. 1 bis Fig. 3 aufweist,
- Fig. 5: eine Darstellung einer Bearbeitungsmaschine analog zu Fig.4, die eine Bestrahlungseinrichtung mit einer Scannereinrichtung, aber ohne eine Strahlformungseinrichtung aufweist,
- Fig. 6a,b: Darstellungen einer Pulverschicht mit einem linienförmigen Bestrahlungsbereich, der durch eine oszillierende Bewegung eines Laserstrahls bzw. von drei Laserstrahlen erzeugt und entlang einer Vorschubrichtung bewegt wird,
- Fig. 7a-c: drei Darstellungen von zwei Laserstrahlen, die jeweils eine oszillierende Bewegung ausführen und die gemeinsam einen linienförmigen Bestrahlungsbereich erzeugen,
- Fig. 8a,b: zwei Darstellungen von zwei Laserstrahlen, die eine gegenläufige bzw. eine gleichsinnige oszillierende Bewegung ausführen, sowie
- Fig. 9: Darstellungen von zwei Laserstrahlen, die eine oszillierende Bewegung mit entgegengesetztem Drehsinn ausführen.

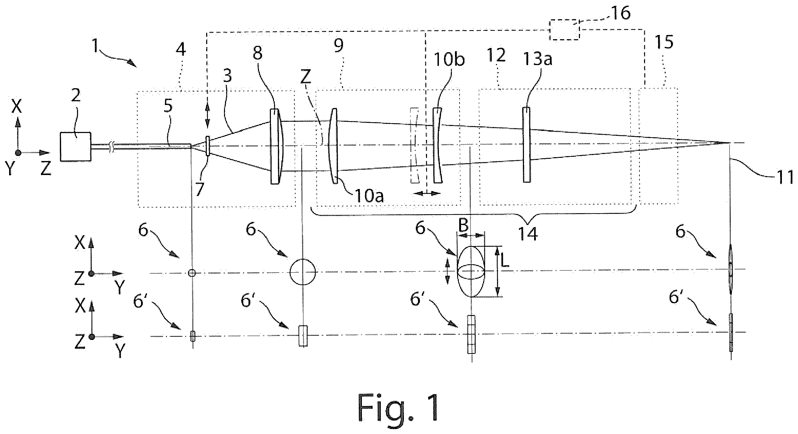

**Fig. 1** zeigt einen Aufbau einer Bestrahlungseinrichtung 1, welche eine Strahlquelle 2 in Form einer Laserquelle, beispielsweise in Form eines Nd:YAG-Lasers oder eines Faserlasers, zur Erzeugung eine Laserstrahls 3 aufweist. Die Bestrahlungseinrichtung 1 weist eine Kollimationseinrichtung 4 zur Kollimation des Laserstrahls 3 auf, welche eine Lichtleitfaser 5 zur Führung des Laserstrahls 3 ausgehend von der Strahlquelle 2 umfasst. An einem der Strahlquelle 2 abgewandten Ende der Lichtleitfaser 5 tritt der Laserstrahl 3 divergent aus. Die Strahlachse Z des Laserstrahls 3 entspricht bei dem in Fig. 1 gezeigten Beispiel der Z-Achse eines XYZ-Koordinatensystems.

Das Strahlprofil des Laserstrahls 3 an der Stirnseite des austrittsseitigen Endes der Lichtleitfaser 5 wird u.a. durch die Querschnittsgeometrie der Lichtleitfaser 5 bestimmt. In Fig. 1 unten ist ein Strahlprofil 6 des Laserstrahls 3 an unterschiedlichen Stellen im Strahlengang der in Fig. 1 oben dargestellten Bestrahlungseinrichtung 1 für eine Lichtleitfaser 5 mit einem kreisförmigen Querschnitt dargestellt. In Fig. 1 weiter unten ist zum Vergleich ein Strahlprofil 6' des Laserstrahls 3 bei der Verwendung einer Lichtleitfaser 5 mit einem rechteckigen Querschnitt dargestellt. Das Strahlprofil 6, 6' des Laserstrahls 3 ist jeweils in einer Ebene XY senkrecht zur Strahlachse Z des Laserstrahls 3 dargestellt. Es versteht sich, dass der Laserstrahl 3 auch ein anderes Strahlprofil aufweisen kann, beispielsweise ein Multimode-Strahlprofil oder ein Top-Hat-Strahlprofil.

Der aus der Lichtleitfaser 5 divergent austretende Laserstrahl 3 durchläuft zunächst ein optisches Element 7, welches beispielsweise als Schutzglas ausgebildet sein kann, das an einem in Fig. 1 nicht dargestellten Gehäuse der Bestrahlungseinrichtung 1 angebracht ist, und trifft nachfolgend auf eine Kollimationslinse 8, bei der es sich im gezeigten Beispiel um eine Plankonvexlinse handelt, zur Kollimation des Laserstrahls 3. Es versteht sich, dass auch eine oder mehrere andere typischer Weise sphärische Linsen, beispielsweise Bikonvexlinsen, zur Kollimation des Laserstrahls 3 verwendet werden können. Das Strahlprofil 6, 6' des Laserstrahls 3 nach der Kollimationslinse 8 entspricht dem (vergrößerten) Strahlprofil 6, 6' des Laserstrahls 3 am Austritt der Lichtleitfaser 5.

Bei der in Fig. 1 gezeigten Vorrichtung weist die Bestrahlungseinrichtung 1 ein erstes Strahlteleskop 9 auf, welches eine erste Zylinderlinse 10a und eine zweite Zylinderlinse 10b umfasst, die im Strahlweg des kollimierten Laserstrahls 3 aufeinander folgend angeordnet sind. Die beiden Zylinderlinsen 10a, 10b des ersten Strahlteleskops 9 weisen eine Zylindersymmetrie mit einer Symmetrieachse auf, die in Y-Richtung verläuft, so dass die beiden Zylinderlinsen 10a, 10b das Strahlprofil 6, 6' des Laserstrahls 3 in X-Richtung, aber nicht in Y-Richtung beeinflussen. Die erste Zylinderlinse 10a ist plankonvex ausgebildet und erzeugt aus dem kollimiert auftreffenden Laserstrahl 3 einen in X-Richtung konvergenten Laserstrahl 3. Die erste Zylinderlinse 10a weist eine Brennweite f₁ auf, die so gewählt ist, dass die erste Zylinderlinse 10a den Laserstrahl 3 auf eine in Fig. 1 rechts dargestellte Ebene fokussiert, an der ein Bearbeitungsfeld 11 gebildet ist. Der konvergierende Laserstrahl 3 trifft nachfolgend auf die zweite, plan-konkave Zylinderlinse 10b des ersten Strahlteleskops 9, welche eine Brennweite f₂ aufweist und welche den in X-Richtung konvergenten Laserstrahl 3 geringfügig in X-Richtung aufweitet.

Die zweite Zylinderlinse 10b ist in Richtung der Strahlachse Z des Laserstrahls 3 mittels eines Antriebs verschiebbar, die in Fig. 1 durch einen Doppelpfeil angedeutet ist. Durch die Verschiebung der zweiten Zylinderlinse 10b in Richtung der Strahlachse Z kann die Länge L des Strahlprofils 6, 6' des Laserstrahls 3 in einer ersten Richtung (X-Richtung) verändert werden, wie in Fig. 1 ebenfalls durch einen Doppelpfeil angedeutet ist. Durch die vergleichsweise geringen Verfahrwege bei der Verschiebung der zweiten Zylinderlinse 10b ist sichergestellt, dass der Laserstrahl 3 stets auf dem Bearbeitungsfeld 11 fokussiert wird. Bei dem in Fig. 1 gezeigten Beispiel ist die (variable) Länge L des Strahlprofils 6, 6' entlang der ersten Richtung (X-Richtung) größer als die (konstante) Breite B des Strahlprofils 6, 6' entlang der zweiten Richtung (Y-Richtung), es versteht sich aber, dass durch Verschieben der zweiten Zylinderlinse 10b ggf. auch ein Strahlprofil 6, 6' erzeugt werden kann, bei dem die Länge L und die Breite B übereinstimmen oder dessen Länge L kleiner ist als dessen Breite B, so dass bei dem die erste Richtung (X-Richtung) und die zweite Richtung (Y-Richtung) ihre Rollen tauschen.

Bei der in Fig. 1 gezeigten Bestrahlungseinrichtung 1 ist im Strahlweg nach dem ersten Strahlteleskop 9 eine weitere Zylinderlinse 13a angeordnet, die gegenüber den beiden Zylinderlinsen 10a, 10b des ersten Strahlteleskops 9 in einer Ebene XY senkrecht zur Strahlachse Z des Laserstrahls 3 um 90° verdreht angeordnet ist. Die Zylinderachse der weiteren Zylinderlinse 13a verläuft somit in X-Richtung, weshalb die weitere Zylinderlinse 13a das Strahlprofil des Laserstrahls 3 in Y-Richtung, aber nicht in X-Richtung verändert. Die weitere Zylinderlinse 13a weist eine Brennweite f₃ auf, die so gewählt ist, dass der nach dem ersten Strahlteleskop 9 in Y-Richtung immer noch kollimierte Laserstrahl 3 auch in X-Richtung auf dem Bearbeitungsfeld 11 fokussiert wird. Eine zwischen der weiteren Zylinderlinse 13a und dem Bearbeitungsfeld 11 angeordnete Scannereinrichtung 15 dient zur Ausrichtung des Laserstrahls 3 an eine einstellbare Position in dem Bearbeitungsfeld 11, wie weiter unten näher beschrieben wird.

Die in Fig. 1 gezeigte Bestrahlungseinrichtung 1 bildet das Strahlprofil 6, 6' in einer XY-Ebene an der Stirnseite des austrittsseitigen Endes der Lichtleitfaser 5 auf die XY-Ebene ab, in der das Bearbeitungsfeld 11 gebildet ist. Das erste Strahlteleskop 9 bildet gemeinsam mit der weiteren Zylinderlinse 13a eine Strahlformungseinrichtung 14, welche es ermöglicht, durch die Verschiebung der zweiten Zylinderlinse 10b des ersten Strahlteleskops 9 die Länge L des Strahlprofils 6, 6' des Laserstrahls 3 zu verändern bzw. einzustellen. Gegebenenfalls kann bei der in Fig. 1 gezeigten Bestrahlungseinrichtung 1 auf die erste Zylinderlinse 10a verzichtet werden, d.h. der Laserstrahl 3 trifft kollimiert auf die (zweite) Zylinderlinse 10b auf. In diesem Fall bildet die Kollimationslinse 8 gemeinsam mit der (zweiten) Zylinderlinse 10b ein erstes Strahlteleskop 9. Die Breite B des Strahlprofils 6, 6' des Laserstrahls 3 lässt sich mit Hilfe der in Fig. 1 gezeigten Bestrahlungseinrichtung 1 nicht verändern.

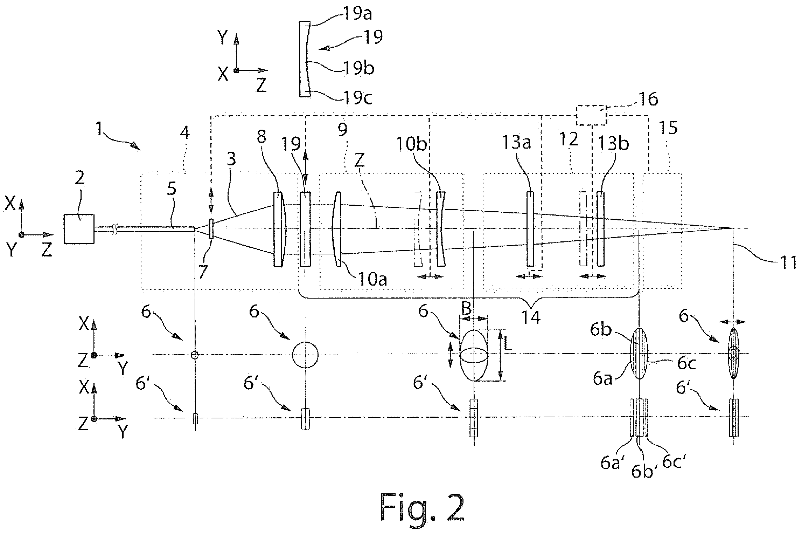

**Fig. 2** zeigt eine Bestrahlungseinrichtung 1, die sich von der in Fig. 1 gezeigten Bestrahlungseinrichtung 1 dadurch unterscheidet, dass die Strahlformungseinrichtung 14 eine zweite weitere Zylinderlinse 13b aufweist, die mit der (ersten) weiteren Zylinderlinse 13a ein zweites Strahlteleskop 12 bildet. Die zweite weitere Zylinderlinse 13b weist wie die erste weitere Zylinderlinse 13a eine Zylinderachse auf, die in X-Richtung verläuft, so dass diese den Laserstrahl 3 nur in Y-Richtung, aber nicht in X-Richtung beeinflusst. Die weitere zweite Zylinderlinse 13b ist entlang der Strahlachse Z des Laserstrahls 3 mittels einer durch einen Doppelpfeil angedeuteten Antriebseinrichtung verschiebbar. Bei der ersten weiteren Zylinderlinse 13a des zweiten Strahlteleskops 12 kann es sich wie bei der ersten Zylinderlinse 10a des ersten Strahlteleskops 9 beispielsweise um eine Plankonvexlinse handeln. Bei der zweiten weiteren Zylinderlinse 13b des zweiten Strahlteleskops 12 kann es sich wie bei der zweiten Zylinderlinse 10b des ersten Strahlteleskops 9 beispielsweise um eine plan-konkave Linse handeln. Durch die Verschiebung der zweiten weiteren Zylinderlinse 13b des zweiten Strahlteleskops 12 kann die Breite B des Strahlprofils 6, 6' des Laserstrahls 3 entlang der zweiten Richtung (Y-Richtung) eingestellt werden.

Zusätzlich zur zweiten weiteren Zylinderlinse 13b des zweiten Strahlteleskops 12 kann ggf. auch die erste weitere Zylinderlinse 13a des zweiten Strahlteleskops 12 in Strahlrichtung Z des Laserstrahls 3 bewegt werden. Gegebenenfalls kann lediglich eine weitere erste Zylinderlinse 13a in der Strahlformungseinrichtung 14 vorgesehen sein, die zusammen mit der Kollimationslinse 8 ein zweites Strahlteleskop 12 bildet. Bei dem in Fig. 2 gezeigten Ausführungsbeispiel kann sowohl die Länge L als auch die Breite B des Strahlprofils 6, 6' verändert bzw. eingestellt werden. Insbesondere kann durch die Veränderung sowohl der Länge L als auch der Breite B ein Strahlprofil 6, 6' des Laserstrahls 3 eingestellt werden, bei dem die Länge L mit der Breite B übereinstimmt. Eine Veränderung der Orientierung des Strahlprofils in der XY-Ebene senkrecht zur Strahlachse Z ist mit der in Fig. 2 gezeigten Bestrahlungseinrichtung 1 jedoch nicht möglich.

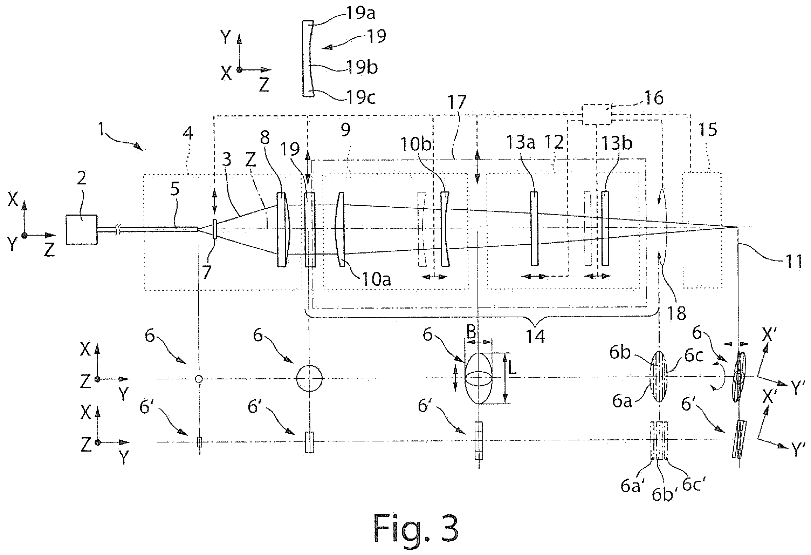

Bei der Bestrahlungseinrichtung 1, welche in **Fig. 3** gezeigt ist, ist eine solche Veränderung der Orientierung des Strahlprofils 6, 6' des Laserstrahls 3 in Form einer Drehung der ersten Richtung X und der zweiten Richtung Y senkrecht zur Strahlachse Z des Laserstrahls 3 möglich. In Fig. 3 ist unten rechts das jeweils resultierende Strahlprofil 6, 6' des Laserstrahls 3 nach der Drehung gezeigt, welches eine neue erste Richtung X' und eine neue zweite Richtung Y' aufweist, die gegenüber der ersten Richtung X und der zweiten Richtung Y vor der Strahlformungseinrichtung 14 in der XY-Ebene unter einem Winkel verlaufen, d.h. gedreht sind.

Um die Drehung des Strahlprofils 6, 6' des Laserstrahls 3 um die Strahlachse Z zu bewirken, kann die gesamte in Fig. 3 gezeigte Strahlformungseinrichtung 14 um die Strahlrichtung Z des Laserstrahls 3 gedreht werden. Zu diesem Zweck sind das erste Strahlteleskop 9 und das zweite Strahlteleskop 12 drehbar gelagert, wobei die drehbare Lagerung im gezeigten Beispiel dadurch realisiert wird, dass das erste und zweite Strahlteleskop 9, 12 auf einem gemeinsamen Halter 17 angeordnet sind, der um die Strahlachse Z drehbar gelagert ist. Die Bestrahlungseinrichtung 1 weist einen rotatorischen Antrieb 18 auf, der ausgebildet ist, den Halter 17 und somit die beiden Strahlteleskope 9, 12 um die Strahlachse Z zu drehen.

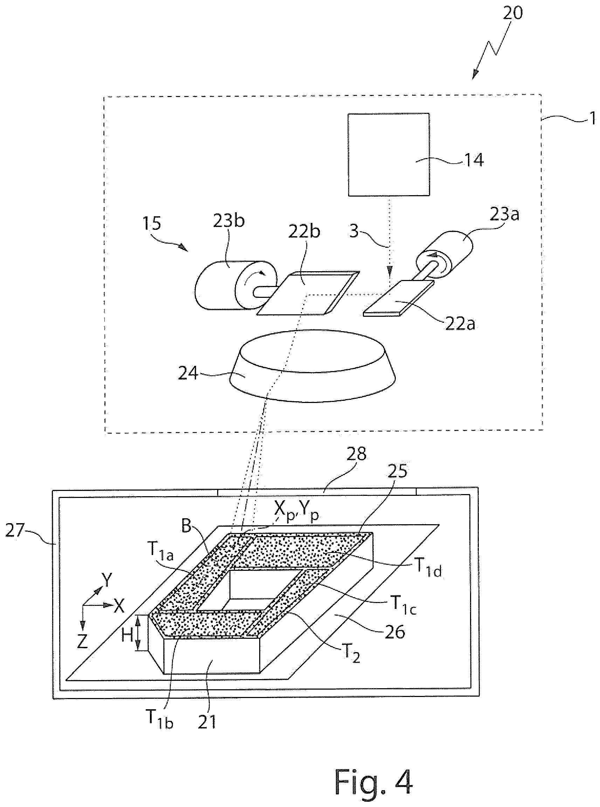

Die Ansteuerung der Antriebe für die Zylinderlinsen 10b, 13a, 13b bzw. für den rotatorischen Antrieb 18 wird von einer Steuerungseinrichtung 16 vorgenommen, die auch die Scannereinrichtung 15 ansteuert, um den Laserstrahl 3 an einer einstellbaren bzw. gewünschten Position X_{P}, Y_{P} (vgl. Fig. 4) auf dem Bearbeitungsfeld 11 auszurichten, wie weiter unten näher beschrieben wird. Die Steuerungseinrichtung 16 dient insbesondere dazu, die jeweiligen Antriebe für die Zylinderlinsen 10b, 13a, 13b sowie den rotatorischen Antrieb 18 in Abhängigkeit von der Position X_{P}, Yp des Laserstrahls 3 in dem Bearbeitungsfeld 11 und somit die Länge L und/oder die Breite B des Strahlprofils 6, 6' sowie ggf. die Ausrichtung des Strahlprofils 6, 6' senkrecht zur Strahlrichtung Z des Laserstrahls 3 zu verändern bzw. einzustellen. Es versteht sich, dass diese Einstellung auch von der Geometrie des herzustellenden dreidimensionalen Bauteils bzw. der (virtuellen) Aufteilung des zu bestrahlenden Bereichs in Teilbereiche abhängig ist, wie weiter unten näher beschrieben wird. Es versteht sich auch, dass die Veränderung der Ausrichtung des Strahlprofils 6, 6' auch bei einer Bestrahlungseinrichtung 1 erfolgen kann, welche nur eine Veränderung der Länge L des Strahlprofils 6, 6', aber keine Veränderung der Breite B des Strahlprofils 6, 6' ermöglicht, wie dies bei der in Fig. 1 gezeigten Bestrahlungseinrichtung 1 der Fall ist.

Die in Fig. 1 bis Fig. 3 gezeigte Bestrahlungseinrichtung 1 kann in einer Bearbeitungsmaschine 20 zum Herstellen von dreidimensionalen Bauteilen 21 eingesetzt werden, welche beispielhaft in **Fig. 4** dargestellt ist. Im gezeigten Beispiel weist die Scannereinrichtung 15 der Bestrahlungseinrichtung 1 einen ersten und einen zweiten Scannerspiegel 22a, 22b auf, die mittels zugehöriger Drehantriebe 23a, 23b um zwei Drehachsen drehbar sind, die beispielsweise mit der X-Richtung bzw. mit der Y-Richtung eines XYZ-Koordinatensystems übereinstimmen können. Im Strahlengang auf die Scannereinrichtung 15 folgt ein Objektiv 24, welches zusätzlich eine Fokussierung des Laserstrahls 3 vornimmt, um den von der Scannereinrichtung 15 abgelenkten Laserstrahl 3 in einem Bearbeitungsfeld 11 (vgl. Fig. 1 bis Fig. 3) zu fokussieren. Das Objektiv 24 nimmt hierbei keine Homogenisierung vor, um das Strahlprofil 6, 6' nicht zu verändern. Das Bearbeitungsfeld 11 entspricht einer XY-Ebene, in der eine in Fig. 4 gezeigte oberste Pulverschicht 25 eines auf einen Träger 26, genauer gesagt auf eine Trägerplatte, aufgebrachten Pulverbetts angeordnet ist. Der Träger 26 ist in einer Bearbeitungskammer 27 angeordnet, die ein Sichtfenster 28 für den Durchtritt des Laserstrahls 3 aufweist.

Das Objektiv 24 dient unter anderem auch dazu, den Laserstrahl 3 unabhängig von der Position X_{P}, Y_{P} auf dem Bearbeitungsfeld 11, welches bei einer geeigneten Positionierung der Bestrahlungseinrichtung 1 mit der XY-Ebene mit der in einer vorgegebenen Höhe H über dem Träger 26 angeordneten Pulverschicht 25 übereinstimmt, die Strahlachse Z des aus dem Objektiv 24 austretenden Laserstrahls 3 im Wesentlichen senkrecht zur XY-Ebene bzw. zur Pulverschicht 25 auszurichten. Es versteht sich, dass die Pulverschicht 25 anders als in Fig. 4 gezeigt ist nicht nur auf die Oberseite des bereits fertiggestellten Teils des dreidimensionalen Bauteils 21 begrenzt ist, sondern vielmehr die oberste Schicht eines Pulverbettes bildet, welches sich über die gesamte Oberseite des Trägers 26 bis zur Höhe H erstreckt.

Die Pulverschicht 25, genauer gesagt der in Fig. 4 gezeigte Bereich der Pulverschicht 25, welcher dem für das Herstellen einer zusätzlichen Schicht des dreidimensionalen Bauteils 21 bestrahlt werden soll und welcher daher mit der Geometrie des herzustellenden Bauteils 21 übereinstimmt, wird bei dem in Fig. 4 gezeigten Beispiel virtuell von der Bearbeitungsmaschine 20, beispielsweise von der Steuerungseinrichtung 16 der Bestrahlungseinrichtung 1, in vier flächenhafte erste Teilbereiche T₁ₐ, T_{1b}, T_{1c}, T_{1d} sowie in einen zweiten Teilbereich T₂ aufgeteilt, der im Wesentlichen die inneren und äußeren Konturlinien des Bauteils 21 auf der entsprechenden Höhe H sowie weitere innen liegende Konturlinien enthält, welche die ersten Teilbereiche T₁ₐ,... , T_{1d} voneinander separieren.

Die ersten Teilbereiche T₁ₐ,... , T_{1d} sind im Wesentlichen streifenförmig bzw. rechteckig ausgebildet, wobei die Länge L des Strahlprofils 6, 6' des Laserstrahls 3 in dem jeweiligen Teilbereich T₁ₐ,... , T_{1d} auf dem Bearbeitungsfeld 11 bzw. der Pulverschicht 25 nicht größer ist als die maximal mittels der Strahlformungseinrichtung 14 einstellbare Länge L. Der erste Teilbereich T₁ₐ des Bearbeitungsfelds 11 bzw. der Pulverschicht 25 wird mit einem Strahlprofil 6, 6' bestrahlt, dessen Länge L (in X-Richtung) deutlich größer ist als dessen Breite B, d.h. mit einem linienförmigen Strahlprofil 6, 6'. Die Position X_{P}, Y_{P} des Zentrums des Strahlprofils 6, 6' des Laserstrahls 3 wird hierbei entlang einer Bahnkurve B bewegt, welche in Y-Richtung in der Mitte des ersten Teilbereichs T₁ₐ verläuft. Die Länge L des Strahlprofils 6, 6' des Laserstrahls 3 verläuft senkrecht zur Richtung der Bahnkurve B (d.h. in X-Richtung) und die Länge L wird in Abhängigkeit von der Position X_{P}, Yp des Laserstrahls auf dem Bearbeitungsfeld 11 dynamisch so angepasst, dass diese mit der jeweiligen Erstreckung (bzw. der Breite) des ersten Teilbereichs T₁ₐ in X-Richtung übereinstimmt. Auf diese Weise wird der erste Teilbereich T₁ₐ vollständig bestrahlt, ohne dass zu diesem Zweck eine Richtungsumkehr des Laserstrahls 3 erforderlich ist. Das linienförmige Strahlprofil 6, 6' des Laserstrahls 3 ist in dem ersten Teilbereich T₁ₐ beispielhaft an mehreren Positionen gestrichelt dargestellt.

Entsprechend wird auch der zweite Teilbereich T_{2b} mittels des Laserstrahls 3 bestrahlt, wobei im gezeigten Beispiel zwischen der Bestrahlung des ersten flächenhaften Teilbereichs T₁ₐ und der Bestrahlung des zweiten flächenhaften Teilbereiches T_{1b} die Ausrichtung des Strahlprofils 6, 6' in der XY-Ebene gedreht wird, und zwar um 90°. Auf diese Weise kann der zweite flächenhafte Teilbereich T_{1b} des Bearbeitungsfeldes 11 bzw. der Pulverschicht 25 analog zum ersten flächenhaften Teilbereich T₁ₐ bestrahlt werden, d.h. es kann die Länge L des (gedrehten) Strahlprofils 6, 6' verändert werden, während der Laserstrahl 3, genauer gesagt das Zentrum des Strahlprofils 6, 6', sich entlang einer Geraden bewegt, die in der Mitte des zweiten flächenhaften Teilbereichs T_{1b} in X-Richtung verläuft.

Entsprechend können durch eine geeignete Drehung des Strahlprofils 6, 6' auch der dritte und der vierte flächenhafte Teilbereich T_{1c}, T_{1d} bestrahlt werden. Alternativ oder zusätzlich zu einer Drehung des Strahlprofils 6, 6' können die flächenhaften Teilbereiche T₁ₐ, ..., T_{1d} auf die weiter oben beschriebene Weise bestrahlt werden, ohne dass zu diesem Zweck eine Drehung des Strahlprofils 6, 6' erfolgt. Gegebenenfalls kann in diesem Fall die Geometrie der flächenhaften Teilbereiche T₁ₐ, ..., T_{1d} geeignet angepasst werden. Beispielweise kann bei der Verwendung der in Fig. 1 gezeigten Bestrahlungseinrichtung 1, die nur eine Veränderung der Länge L des Strahlprofils 6, 6' in X-Richtung zulässt, eine Aufteilung des zu bestrahlenden Bereichs der Pulverschicht 25 in mehrere sich mit der Längsseite in Y-Richtung erstreckende flächenhafte Teilbereiche T₁ₐ, ... erfolgen, deren Breite in X-Richtung jeweils nicht größer als die maximal einstellbare Länge L des Strahlprofils 6, 6' in X-Richtung ist. Gegebenenfalls kann nicht nur die Länge L und/oder die Breite B des Strahlprofils 6, 6', sondern auch die Ausrichtung des Strahlprofils 6, 6' senkrecht zur Strahlachse Z während der Bestrahlung eines einzelnen flächenhaften Teilbereichs T₁ₐ ..., T_{1d} eingestellt bzw. verändert werden.

Nach der Bestrahlung der flächenhaften ersten Teilbereiche T₁ₐ, ..., T_{1d} erfolgt die Bestrahlung des zweiten Teilbereichs T₂, wozu im gezeigten Beispiel das Strahlprofil 6, 6' des Laserstrahls 3 mittels der Strahlformungseinrichtung 14 so eingestellt wird, dass die Länge L und die Breite B des Strahlprofils 6, 6' übereinstimmen. Die Länge L (und entsprechend die Breite B) wird zudem mittels der Strahlformungseinrichtung 14 auf weniger als ca. 1,0 mm, bevorzugt weniger als 100 µm, insbesondere auf einige 10 µm eingestellt. Auf diese Weise kann der zweite, die Konturlinien enthaltende Teilbereich T₂ der Pulverschicht 25 mittels eines im Wesentlichen punktförmigen Laserstrahls 3 bestrahlt werden. Es versteht sich, dass die Bestrahlung des zweiten Teilbereichs T₂ alternativ auch vor der Bestrahlung der flächenhaften ersten Teilbereiche T₁ₐ, ..., T_{1d} erfolgen kann. Gegebenenfalls kann für die Bestrahlung des zweiten Teilbereichs T₂ alternativ die Strahlformungseinrichtung 14 aus dem Strahlengang des Laserstrahls 3 entfernt und beispielsweise durch eine Fokussierlinse ersetzt werden, um ein Strahlprofil 6 zu erhalten, bei dem die Länge L und die Breite B übereinstimmen. Die auf die oben beschriebene Weise entsprechend des Hülle-Kern-Verfahrens vollständig bestrahlte Pulverschicht 25 bildet eine (weitere) Schicht des dreidimensionalen Bauteils 21 aus.

Mittels einer nicht dargestellten Auftragseinrichtung, beispielsweise unter Verwendung eines Rakels, kann ein in Pulverform vorliegender Stoff, beispielsweise ein Metallpulver, aus einem Vorratsbehälter der Bearbeitungsmaschine 20 entnommen werden, um eine weitere Pulverschicht 25 auf das Pulverbett mit dem dreidimensionalen Bauteil 21 aufzubringen, welches bereits bis zur Höhe H fertiggestellt ist. Dieser Vorgang kann so lange fortgesetzt werden, bis das dreidimensionale Bauteil 21 vollständig fertiggestellt ist. In Abhängigkeit von der momentanen Fläche des Strahlprofils 6, 6' des Laserstrahls 3 in dem Bearbeitungsfeld 11 kann ggf. bei der Bestrahlung auch eine Anpassung der Leistung des Laserstrahls 3 erfolgen. Hierbei kann die Steuerungseinrichtung 16 die momentane Flächenleistung, welche von der momentanen Laserleistung und der momentanen Länge und Breite des Strahlprofils 6, 6' abhängt, mit der Vorschubgeschwindigkeit derart koppeln, dass die Volumenaufschmelzleistung konstant bzw. stabil gehalten wird und auf diese Weise einen sicherer Aufschmelzprozess bzw. ein sicherer Schweißprozess gewährleistet werden kann.

Zusätzlich zur Veränderung der Länge L und/oder der Breite B des Strahlprofils 6, 6' des Laserstrahls 3 kann eine Änderung des Strahlprofils 6, 6' erfolgen, indem das Strahlprofil 6, 6' mittels eines weiteren optischen Elements 19 verändert wird, welches wahlweise in den Strahlengang des Laserstahls 3 nach der Kollimationslinse 8 (oder ggf. an anderer Stelle) eingebracht oder aus diesem entfernt werden kann, wie dies in Fig. 2 und in Fig. 3 gezeigt ist. Es versteht sich, dass eine solche zusätzliche Veränderung des Strahlprofils 6, 6' auch bei der in Fig. 1 gezeigten Bestrahlungseinrichtung 1 erfolgen kann.

Im gezeigten Beispiel ist das weitere optische Element 19 ausgebildet, das Strahlprofil 6, 6' des Laserstrahls 3 entlang der zweiten Richtung Y, d.h. entlang seiner Breite B, in einen ersten Profilbereich 6a, 6a', einen zweiten Profilbereich 6b, 6b' und einen dritten Profilbereich 6c, 6c'aufzuteilen, die jeweils durch dazwischen liegende Profilbereiche getrennt sind, in denen das Strahlprofil 6, 6' nur eine sehr geringe Leistung aufweist, wie dies in Fig. 2 dargestellt ist. Für die Unterteilung des Strahlprofils 6, 6' ist das weitere optische Element 19 im gezeigten Beispiel als Keilplatte ausgebildet und weist zwei keilförmige Abschnitte 19a, 19c mit planen, zur Strahlachse Z unter einem Winkel angeordneten Flächen auf, die seitlich benachbart zu einem zentralen, vollständig planen Plattenbereich 19b angeordnet sind. Die Teile des Strahlprofils 6, 6', die auf die keilförmigen Abschnitte 19a, 19c treffen, werden in Y-Richtung jeweils nach außen, d.h. von der Strahlachse Z weg, abgelenkt und bilden den ersten und dritten Profilbereich 6a, 6a' bzw. 6c, 6c'. Der Teil des Strahlprofils 6, 6' welcher den planen Plattenbereich 19b durchläuft, bildet den zweiten, mittleren Profilbereich 6b, 6b' des Strahlprofils 6, 6'.

Eine solche Unterteilung des Strahlprofils 6, 6'in der zweiten Richtung (Y-Richtung) kann dazu dienen, eine Vorwärmung bzw. eine Nachwärmung des herzustellenden Bauteils 21 bzw. der Pulverschicht 25 zu erzeugen. Der Anteil der Leistung des Laserstrahls 3, der auf den ersten, zweiten bzw. dritten Profilbereich 6a, 6a'; 6b, 6b'; 6c, 6c' entfällt, ist im gezeigten Beispiel durch die Geometrie des weiteren optischen Elements 19 in Form der Keilplatte vorgegeben. Die Anteile können ggf. in geringen Grenzen dadurch verändert werden, dass die Position der Keilplatte 19 in Y-Richtung verändert wird. Alternativ zur Keilplatte 19 können für die Unterteilung des Strahlprofils beispielsweise zwei keilförmige optische Elemente in der Strahlformungseinrichtung 14 vorgesehen sein, die analog zu den keilförmigen Abschnitten 19a, 19c der Keilplatte 19 ausgebildet sind und die unabhängig voneinander in Y-Richtung verschoben werden können. Durch die unabhängige Verschiebung der keilförmigen optischen Elemente in den bzw. aus dem Strahlengang des Laserstahls 3 kann der Anteil der Leistung des Laserstrahls 3 und somit der gewünschte Energieeintrag bei der Vorwärmung bzw. bei der Nachwärmung gezielt eingestellt werden. Beispielsweise kann ein hoher Anteil, z.B. mehr als 70 %, der gesamten Leistung des Laserstrahls 3 auf den zweiten, mittleren Profilbereich 6b, 6b' entfallen, während auf den ersten und den zweiten Profilbereich jeweils ein geringer Anteil der gesamten Leistung des Laserstrahls 3 entfällt.

Das weitere optische Element 19 kann mit einem in Fig. 2 und Fig. 3 durch einen Doppelpfeil angedeuteten Antrieb in den Strahlengang des Laserstrahls 3 eingebracht bzw. aus diesem heraus gefahren werden, je nachdem, ob die zusätzliche Formung bzw. eine Aufteilung des Strahlprofils 6, 6' mittels des weiteren optischen Elements 19 gewünscht ist oder nicht. Das Ein- und Ausbringen des weiteren optischen Elements 19 kann ggf. in Abhängigkeit von der Position Xp, Y_{P} des Laserstrahls 3 auf dem Bearbeitungsfeld 11 erfolgen. So können beispielsweise die flächenhaften ersten Teilbereiche T₁ₐ, ..., T_{1d} mit einem in den Strahlengang eingebrachtem weiteren optischen Element 19 bestrahlt werden, wohingegen der zweite Teilbereich T₂ ohne ein in den Strahlengang des Laserstrahls 3 eingebrachtes weiteres optisches Element 19 bestrahlt werden kann.

Es versteht sich, dass bei der in Fig. 3 gezeigten Bestrahlungseinrichtung 1 ggf. eine Drehung des weiteren optischen Elements 19 gemeinsam mit dem um die Strahlachse Z drehbaren Halter 17 erfolgen kann bzw. dass das weitere optische Element 19 auf dem um die Strahlachse Z drehbaren Halter 17 positioniert sein kann. Alternativ oder zusätzlich kann zur zusätzlichen Formung, insbesondere zur Aufteilung, des Strahlprofils 6, 6' das in Fig. 1 bis Fig. 3 gezeigte optische Element 7 verwendet werden, welches im Strahlengang vor der Kollimationslinse 8 angeordnet ist, wenn dieses beispielsweise als diffraktives optisches Element ausgebildet ist. Das diffraktive optische Element 7 kann in diesem Fall wie weiter oben beschrieben mittels eines Antriebs in den Strahlengang eingebracht bzw. aus diesem heraus gefahren werden, je nachdem, ob eine zusätzliche Formung des Strahlprofils 6, 6' gewünscht ist oder nicht.

Bei der in Fig. 1 bis Fig. 4 beschriebenen Bestrahlungseinrichtung 1 kann auf die weiter oben beschriebene Weise die Herstellung eines dreidimensionalen Bauteils 21 mit einer höheren Aufbaurate erfolgen als dies bei herkömmlich zu diesem Zweck verwendeten Bearbeitungsmaschinen der Fall ist. Zudem kann die Scannereinrichtung 15 aufgrund der nicht erforderlichen Richtungsumkehr weniger dynamisch und daher kostengünstiger ausgebildet werden als bei herkömmlichen Bearbeitungsmaschinen. Gegebenenfalls kann hierbei auf die Verwendung eines Objektivs, beispielsweise des in Fig. 4 gezeigten Objektivs 24, verzichtet werden, d.h. die Fokussierung erfolgt ausschließlich vor der Scannereinrichtung 15.

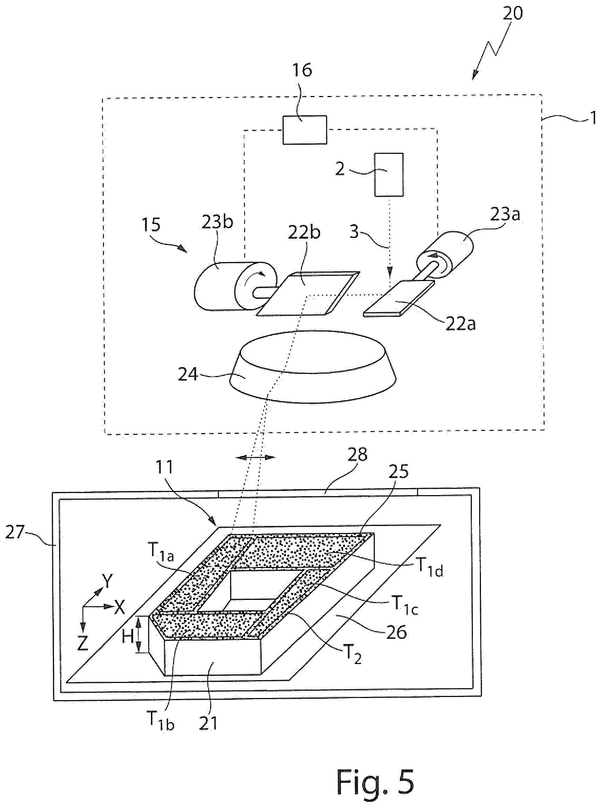

**Fig. 5** zeigt eine Bearbeitungsmaschine 20, die ebenfalls die Herstellung eines dreidimensionalen Bauteils 21 mit einer höheren Aufbaurate ermöglicht. Die Bearbeitungsmaschine 20 von Fig. 5 unterscheidet sich von der in Fig. 4 gezeigten Bearbeitungsmaschine 20 im Wesentlichen dadurch, dass die Bestrahlungseinrichtung **1** keine Strahlformungseinrichtung aufweist. Der von der Strahlquelle 2 erzeugte Laserstrahl 3 wird somit ohne eine Veränderung seines Strahlprofils und somit mit einem typischer Weise kreisförmigen bzw. runden Strahlquerschnitt bzw. "Spot" mit Hilfe der Scannereinrichtung 15 auf das Bearbeitungsfeld 11, genauer gesagt auf die oberste Pulverschicht 25, eingestrahlt.

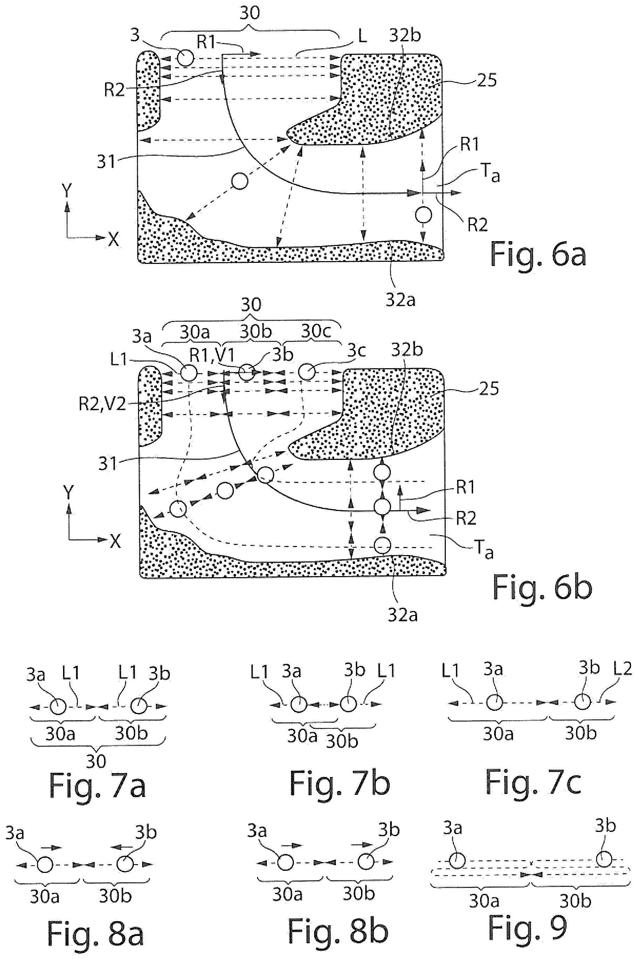

**Fig. 6a** zeigt einen Ausschnitt der obersten Pulverschicht 25 mit einem Teilbereich Tₐ einer Schicht des zu generierenden dreidimensionalen Bauteils 21 von Fig. 5 sowie mit dem Laserstrahl 3, genauer gesagt mit dessen punktförmigem Strahlprofil. Wie in Fig. 6a durch einen gestrichelten Doppelpfeil angedeutet ist, wird der Laserstrahl 3 mit einer oszillierenden Bewegung in einer ersten Richtung R1 (X-Richtung) kontinuierlich und mehrfach über die Pulverschicht 25 bewegt, wobei ein linienförmiger Bestrahlungsbereich 30 erzeugt wird, in dem die Pulverschicht 25 aufgeschmolzen wird. Der linienförmige Bestrahlungsbereich 30, der in Fig. 6a zunächst an einem oberen Ende des Teilbereichs Tₐ erzeugt wird, wird in einer zweiten, von der ersten verschiedenen Richtung R2 entlang einer in Fig. 6a angedeuteten Bahnkurve 31 über die Pulverschicht 25 bewegt, bis der Teilbereich Tₐ mit der gewünschten Geometrie vollständig aufgeschmolzen und somit der erste Teilbereich Tₐ der Schicht des dreidimensionalen Bauteils 21 vollständig hergestellt ist.

Wie in Fig. 6a zu erkennen ist, werden bei der Bewegung des linienförmigen Bestrahlungsbereichs 30 über die Pulverschicht 25 die erste Richtung R1 und die zweite Richtung R2 kontinuierlich verändert, so dass die erste Richtung R1 an dem in Fig. 6a oberen Ende des Teilbereichs Tₐ mit der X-Richtung des (ortsfesten) Bearbeitungsfeldes 11 übereinstimmt, während die erste Richtung R1 am rechten Ende des Teilbereichs Tₐ mit der Y-Richtung des Bearbeitungsfeldes 11 übereinstimmt, d.h. beide Richtungen R1, R2 werden um 90° gedreht.

Die zweite Richtung R2, d.h. die Vorschubrichtung, entspricht am oberen Ende der Pulverschicht 25 der (negativen) Y-Richtung des Bearbeitungsfeldes 11 und wird bei der Bewegung des linienförmigen Bestrahlungsbereichs 30 ebenfalls kontinuierlich um 90° gedreht, so dass die zweite Richtung R2 am rechten Ende des Teilbereichs Tₐ mit der X-Richtung des Bestrahlungsfeldes 11 übereinstimmt. Wie in Fig. 6a ebenfalls angedeutet ist, sind bei der Bewegung des linienförmigen Bestrahlungsbereichs 30 über die Pulverschicht 25 die beiden Richtungen R1, R2 nicht zwingend senkrecht zueinander ausgerichtet, vielmehr kann der Winkel, unter dem die beiden Richtungen R1, R2 zueinander in dem Bearbeitungsfeld 11 ausgerichtet sind, bei der Bewegung über die Pulverschicht 25 variieren. Dabei wird vorzugsweise die Leistung des Laserstrahls 3 während der oszillierenden Bewegung derart geregelt, dass die zu beleuchtende Fläche bzw. der Teilbereich Tₐ einen flächig konstanten Energieeintrag erfährt. In obigem Beispiel, bei dem der linienförmige Bestrahlungsbereich 30 entlang einer "Linkskurve" bewegt wird, wird die Leistung bei der Bewegung entlang der Bahnkurve 31 in positive X- und Y-Richtung gesenkt und in negative X- und Y-Richtung erhöht.

Wie in Fig. 6a ebenfalls zu erkennen ist, wird bei der Bewegung des linienförmigen Bestrahlungsbereichs 30 über die Pulverschicht 25 auch dessen Länge L entlang der vom Ort auf dem Bestrahlungsfeld 11 veränderlichen ersten Richtung R1 verändert, und zwar in Abhängigkeit von der Geometrie des herzustellenden Teilbereichs Tₐ der Schicht des dreidimensionalen Bauteils 21. Die Erzeugung des linienförmigen Bestrahlungsbereichs 30 sowie dessen Bewegung über die Pulverschicht 25 wird im gezeigten Beispiel mit Hilfe der beiden Scannerspiegel 23a, 23b der (zweidimensionalen) Scannereinrichtung 15 realisiert. Zu diesem Zweck werden die Drehantriebe 23a, 23b der beiden Scannerspiegel 22a, 22b mit Hilfe der Steuerungseinrichtung 16 geeignet angesteuert, um den Laserstrahl 3 im Bearbeitungsfeld 11 der Scannereinrichtung 15 geeignet zu positionieren. Die Drehantriebe 23a, 23b können zur Erzeugung der oszillierenden Bewegung mit einer hohen Frequenz angesteuert werden, um eine Oszillationsfrequenz von z.B. mehr als ca. 1 kHz zu erreichen.

Mit Hilfe der Drehantriebe 23a, 23b kann der Laserstrahl 3 insbesondere derart im Bearbeitungsfeld 11 bewegt werden, dass der linienförmige Bestrahlungsbereich 30 praktisch beliebig ausgerichtet bzw. gedreht werden kann und auch die (doppelte) Amplitude der oszillierenden Bewegung, d.h. die Länge L des linienförmigen Bestrahlungsbereichs 30, über einen vergleichsweise großen Wertebereich variiert werden kann, der selbstverständlich durch die Größe des Bearbeitungsfeldes 11 der Scannereinrichtung 15 begrenzt ist. Die Steuerungseinrichtung 16 greift zur Ansteuerung der Drehantriebe 23a, 23b auf Daten über die (zweidimensionale) Geometrie des zu erzeugenden dreidimensionalen Bauteils 21 an der jeweils zu bestrahlenden Pulverschicht 25 zurück, die in einer Speichereinrichtung abgelegt sind bzw. die von einem Programmiersystem vorgegeben werden.

Wie in Fig. 6a,b ebenfalls zu erkennen ist, weisen die beiden Ränder 32a,b des herzustellenden Teilbereichs Tₐ, die bei der Bewegung der beiden Enden des linienförmigen Bestrahlungsbereichs 30 entlang der in Fig. 6a,b gezeigten Bahnkurve 31 entstehen, eine hohe Glattheit auf, d.h. diese entsprechen mit einer hohen Auflösung der Soll-Kontur des Randes des herzustellenden Teilbereichs Tₐ. Die hohe Auflösung wird durch die Veränderung der Ausrichtung sowie durch die Veränderung der Länge L des linienförmigen Bestrahlungsbereichs 30 bei der Bewegung entlang der Bahnkurve 31 erreicht. Einer oder ggf. beide Ränder 32a,b des Teilbereichs Tₐ können mit einer Kontur des herzustellenden Bauteils 21 übereinstimmen. Insbesondere bei großen Bauteilen 21 stimmt/stimmen einer oder beide Ränder 32a,b des Teilbereichs Tₐ ggf. nicht mit der Kontur des Bauteils 21 überein, da sich an den jeweiligen Rand 32a,b seitlich benachbart ggf. ein weiterer herzustellender Teilbereich des Bauteils 21 anschließt.

Fig. 6b zeigt wie Fig. 6a die Herstellung des Teilbereichs Tₐ der Schicht des dreidimensionalen Bauteils 21, bei der in Fig. 6b gezeigten Darstellung werden aber im Gegensatz zu Fig. 6a nicht einer, sondern drei Laserstrahlen 3a-c verwendet, um den linienförmigen Bestrahlungsbereich 30 zu erzeugen. Jeder der drei Laserstrahlen 3a-c führt hierbei eine oszillierende Bewegung aus, die einen ersten, zweiten und dritten Abschnitt 30a-c des linienförmigen Bestrahlungsbereichs 30 bilden. Die drei Abschnitte 30a-c, die den linienförmigen Bestrahlungsbereich 30 bilden, grenzen hierbei unmittelbar aneinander an und weisen die gleiche Länge L1 (entsprechend der doppelten Amplitude der oszillierenden Bewegung) auf. Durch die Verwendung von zwei oder mehr Laserstrahlen 3a-c kann die in die Pulverschicht 25 eingebrachte Leistung gesteigert und die Aufbaurate zur Herstellung des dreidimensionalen Bauteils 21 erhöht werden.

Die drei Laserstrahlen 3a-c sind im gezeigten Beispiel unabhängig voneinander über die Pulverschicht 25 bewegbar. Um dies zu ermöglichen, kann die Scannereinrichtung 15 drei Paare von Scannerspiegeln 22a, 22b aufweisen, die jeweils als zweidimensionale Scanner dienen, um einen jeweiligen Laserstrahl 3a-c über die Pulverschicht 25 zu bewegen. Es versteht sich, dass auch zwei oder mehr als drei Laserstrahlen 3a-c auf diese Weise unabhängig voneinander über die Pulverschicht 25 bzw. über das Bearbeitungsfeld 11 bewegt werden können, Gegebenenfalls können auch diffraktive, ggf. schaltbare optische Elemente dazu verwendet werden, um zwei oder mehr Laserstrahlen 3a-c unabhängig voneinander über die Pulverschicht 25 zu bewegen.

Können zwei oder mehr Laserstrahlen 3a-c unabhängig voneinander über die Pulverschicht 25 bewegt werden, können diese wie in Fig. 6b dargestellt ist einerseits zur gemeinsamen Erzeugung eines linienförmigen Bestrahlungsbereichs 30 verwendet werden. In Abhängigkeit von der Geometrie des herzustellenden Bauteils 21 bzw. von der Geometrie eines jeweils herzustellenden Teilbereichs Tₐ der Schicht des herzustellenden Bauteils 21, entsprechend einem zu bestrahlenden Teilbereich T₁ₐ, ..., T_{1d} bzw. T₂ der Pulverschicht 25 (vgl. Fig. 5), können die zwei oder mehr Laserstrahlen 3a-c andererseits auch dazu verwendet werden, unabhängig voneinander unterschiedliche Teilbereiche T₁ₐ, ..., T_{1d} bzw. T₂ der Pulverschicht 25 (vgl. Fig. 5) zu bestrahlen, wobei z.B. bei der Erzeugung einer Konturlinie des herzustellenden Bauteils 21 der jeweilige Laserstrahl 3a-c keine oszillierende Bewegung ausführt. Die Verwendung von mehreren Laserstrahlen 3a-c erhöht somit die Flexibilität bei der Herstellung unterschiedlicher dreidimensionaler Bauteile 21 deutlich.

Der in Fig. 6b gezeigte linienförmige Bestrahlungsbereich 30 kann mit Hilfe von zwei oder mehr Laserstrahlen 3a, 3b auf unterschiedliche Weise erzeugt werden, um einen Einfluss auf die Stabilität der Schmelze im Sinne einer Schmelzbadberuhigung bzw. einen Einfluss auf die Homogenität der Schmelze zu nehmen, sowie ggf. die Aufbaurate zu steigern, indem die Länge L des linienförmigen Bestrahlungsbereichs 30 bzw. des Schmelzbades vergrößert wird. **Fig. 7a** zeigt die Erzeugung des linienförmigen Bestrahlungsbereichs 30 unter Verwendung von zwei Laserstrahlen 3a, 3b, die analog zu Fig. 6b einen jeweiligen Abschnitt 30a, 30b mit identischer Länge L1 erzeugen, indem diese jeweils eine oszillierende Bewegung ausführen. **Fig. 7b** zeigt einen Fall, bei dem sich die beiden Abschnitte 30a, 30b teilweise, und zwar in einem Bereich, der ca. 10 % der Länge L1 ausmacht, überlappen. **Fig. 7c** zeigt einen Fall, bei dem die beiden Abschnitte 30a, 30b eine unterschiedliche Länge L1, L2 aufweisen, um gemeinsam den linienförmigen Bestrahlungsbereich 30 zu bilden. Es versteht sich, dass die beiden Abschnitte 30a, 30b sich ggf. vollständig (zu 100 %) überlappen können, wobei grundsätzlich jeder Wert für den Überlapp (d.h. zwischen 0 % und 100 %) möglich ist.

**Fig. 8a,b** zeigen den Fall des linienförmigen Bestrahlungsbereichs von Fig. 7a, bei dem die beiden Abschnitte 30a,b sich nicht überlappen und eine identische Länge L1 aufweisen. In Fig. 8a,b weisen die beiden Abschnitte 30a,b eine konstante Phasenbeziehung auf, d.h. die oszillierende Bewegung der jeweiligen Laserstrahlen 3a, 3b erfolgt mit der gleichen Oszillationsfrequenz. Fig. 8a zeigt den Fall, bei dem die beiden Laserstrahlen 3a, 3b gegenläufig bewegt werden, Fig. 8b zeigt den Fall, bei dem die beiden Laserstrahlen 3a, 3b gleichsinnig bewegt werden. Es versteht sich, dass auch andere Phasenbeziehungen zwischen den oszillierenden Bewegungen der beiden Laserstrahlen 3a, 3b möglich sind.

**Fig. 9** zeigt schließlich den unterschiedlichen Drehsinn der oszillierenden Bewegung der beiden Laserstrahlen 3a, 3b bei der gegenläufigen Bewegung von Fig. 8a. Es versteht sich, dass bei der in Fig. 9 gewählten Darstellung die Laserstrahlen 3a, 3b wie in Fig. 8a,b dargestellt ist entlang einer gemeinsamen Linie oszillieren und dass lediglich zur Veranschaulichung des Drehsinns der oszillierenden Bewegung in Fig. 9 eine mäanderförmige Bewegung dargestellt ist. Es versteht sich ebenfalls, dass nicht zwingend eine feste Phasenbeziehung zwischen den oszillierenden Bewegungen der beiden Laserstrahlen 3a, 3b bestehen muss, sondern dass die Oszillationsfrequenzen der beiden Laserstrahlen 3a, 3b ggf. unterschiedlich gewählt werden können.

Die Frequenz der oszillierenden Bewegung des mindestens einen Laserstrahls 3, 3a-c und somit die über eine Periodendauer gemittelte Geschwindigkeit v1 in der ersten Richtung R1 (vgl. Fig. 6b), die zur Erzeugung des linienförmigen Bestrahlungsbereichs 30 verwendet wird, ist deutlich größer als die Vorschubgeschwindigkeit v2, d.h. die Geschwindigkeit in der zweiten Richtung R2. Typischer Weise ist die Geschwindigkeit v1 der oszillierenden Bewegung mindestens zehn Mal so groß, bevorzugt mindestens zwanzig Mal so groß wie die Vorschubgeschwindigkeit v2.

Die Bewegung des bzw. der Laserstrahlen 3, 3a-c zur Erzeugung des dreidimensionalen Bauteils 21 bzw. zur Erzeugung einer jeweiligen Schicht bzw. eines Teilbereichs Tₐ einer jeweiligen Schicht des Bauteils 21 wird von der Steuerungseinrichtung 16 gesteuert. Die Steuerungseinrichtung 16 kann wie in Fig. 5 gezeigt ist innerhalb der Bestrahlungseinrichtung 1 angeordnet sein, es ist aber auch möglich, dass diese außerhalb der Bestrahlungseinrichtung 1 angeordnet ist und über eine kabellose oder kabelgebundene Verbindung mit der Scannereinrichtung 15 sowie mit weiteren Komponenten der Bestrahlungseinrichtung 1 bzw. der Bearbeitungsmaschine 20 kommuniziert.

## Patentansprüche

1. Bestrahlungseinrichtung (1) für eine Bearbeitungsmaschine (20) zum Herstellen von dreidimensionalen Bauteilen (21) durch Bestrahlen von Pulverschichten (25) mittels eines Hochenergiestrahls, insbesondere mittels eines Laserstrahls (3), die Bestrahlungseinrichtung (1) umfassend:
eine Strahlformungseinrichtung (14) zur Formung eines Strahlprofils (6, 6') des Hochenergiestrahls, welches entlang einer ersten Richtung (X) senkrecht zur Strahlachse (Z) des Hochenergiestrahls eine Länge (L) und entlang einer zweiten Richtung (Y) senkrecht zur Strahlachse (Z) des Hochenergiestrahls eine Breite (B) aufweist, die kleiner ist als die Länge (L), sowie
eine Scannereinrichtung (15) zum Ausrichten des Hochenergiestrahls auf eine Position (Xp, Yp) in einem Bearbeitungsfeld (11) der Scannereinrichtung (15) zum Bestrahlen einer Pulverschicht (25) mittels des Hochenergiestrahls, wobei die Bestrahlungseinrichtung (1) ausgebildet ist, abhängig von der Position (X_{P}, Y_{P}) des Hochenergiestrahls in dem Bearbeitungsfeld (11) die Länge (L) und/oder die Breite (B) des Strahlprofils (6, 6') des Hochenergiestrahls in dem Bearbeitungsfeld (11) zu verändern,
**dadurch gekennzeichnet,**
**dass** die Strahlformungseinrichtung (14) mindestens ein erstes einstellbares Strahlteleskop (9) zur Veränderung der Länge (L) des Strahlprofils (6, 6') und mindestens ein zweites einstellbares Strahlteleskop (12) zur Veränderung der Breite (B) des Strahlprofils (6, 6') unabhängig von der Länge (L) des Strahlprofils (6, 6') aufweist.

2. Bestrahlungseinrichtung nach Anspruch 1, bei dem mindestens ein erstes und/oder mindestens ein zweites Strahlteleskop (9, 12) mindestens eine in Richtung der Strahlachse (Z) des Hochenergiestrahls verschiebbare Linse, bevorzugt eine Zylinderlinse (10b, 13a, 13b), aufweist.

3. Bestrahlungseinrichtung nach Anspruch 1 oder 2, bei welcher die Strahlformungseinrichtung (14) zur Formung eines Strahlprofils (6, 6') des Hochenergiestrahls ausgebildet ist, dessen Länge (L) und dessen Breite (B) übereinstimmen.

4. Bestrahlungseinrichtung nach einem der vorhergehenden Ansprüche, welche ausgebildet ist, die Ausrichtung der ersten Richtung (X) und der zweiten Richtung (Y) des Strahlprofils (6, 6') in einer Ebene (XY) senkrecht zur Strahlachse (Z) des Hochenergiestrahls in Abhängigkeit von der Position (X_{P}, Yp) des Hochenergiestrahls in dem Bearbeitungsfeld (11) zu verändern.

5. Bestrahlungseinrichtung nach Anspruch 4, welche ausgebildet ist, das Strahlprofil (6, 6') des Hochenergiestrahls um die Strahlachse (Z) des Hochenergiestrahls zu drehen.

6. Bestrahlungseinrichtung nach Anspruch 5, bei welcher das mindestens eine erste und/oder zweite Strahlteleskop (9, 12) drehbar um die Strahlachse (Z) des Hochenergiestrahls gelagert ist/sind und bei welcher die Bestrahlungseinrichtung (1) mindestens einen Antrieb (17) zur Drehung des mindestens einen ersten und/oder zweiten Strahlteleskops (9, 12) um die Strahlachse (Z) aufweist.

7. Bestrahlungseinrichtung nach einem der vorhergehenden Ansprüche, weiter umfassend: eine im Strahlweg des Hochenergiestrahls vor dem mindestens einen ersten und zweiten Strahlteleskop (9, 12) angeordnete Kollimationseinrichtung (4) zur Kollimation des Hochenergiestrahls.

8. Bestrahlungseinrichtung nach einem der vorhergehenden Ansprüche, bei welcher die Strahlformungseinrichtung (14) zur zusätzlichen Formung des Strahlprofils (6, 6') mindestens ein weiteres optisches Element (19, 7) aufweist.

9. Bestrahlungseinrichtung nach einem der vorhergehenden Ansprüche, weiter umfassend: ein Objektiv (24), zur Fokussierung des Hochenergiestrahls bei der Ausrichtung auf die Position (Xp, Yp) in dem Bearbeitungsfeld (11).

10. Bestrahlungseinrichtung nach einem der vorhergehenden Ansprüche, weiter umfassend: eine Strahlquelle, insbesondere eine Laserquelle (2), zur Erzeugung des Hochenergiestrahls.

11. Bestrahlungseinrichtung nach einem der vorhergehenden Ansprüche, weiter umfassend:
eine Steuerungseinrichtung (16), welche ausgebildet ist, die Strahlformungseinrichtung (14) zur Steuerung der Länge (L) und/oder der Breite (B) des Strahlprofils (6, 6') und bevorzugt der Ausrichtung der ersten Richtung (X) und der zweiten Richtung (Y) des Strahlprofils (6, 6') in Abhängigkeit von der Position (X_{P}, Y_{P}) des Hochenergiestrahls in dem Bearbeitungsfeld (11) anzusteuern.

12. Bestrahlungseinrichtung nach Anspruch 11, bei der die Steuerungseinrichtung (16) ausgebildet ist, die Strahlformungseinrichtung (14) anzusteuern, mindestens einen ersten zur Herstellung einer Schicht des dreidimensionalen Bauteils (21) mittels des Hochenergiestrahls zu bestrahlenden Teilbereich (T₁ₐ, ..., T_{1d}) des Bearbeitungsfelds (11) mit einem Strahlprofil (6, 6') zu bestrahlen, dessen Länge (L) größer ist als dessen Breite (B), und mindestens einen zweiten zur Herstellung derselben Schicht des dreidimensionalen Bauteils (21) mittels des Hochenergiestrahls zu bestrahlenden Teilbereich (T₂) des Bearbeitungsfelds (11) mit einem Strahlprofil (6, 6') zu bestrahlen, dessen Länge (L) und Breite (B) übereinstimmen.

13. Bearbeitungsmaschine (20) zur Herstellung von dreidimensionalen Bauteilen (21) durch Bestrahlen von Pulverschichten (25) mittels eines Hochenergiestrahls, insbesondere mittels eines Laserstrahls (3), umfassend:
eine Bestrahlungseinrichtung (1) nach einem der vorhergehenden Ansprüche,
sowie eine Bearbeitungskammer (27) mit einem Träger (26) zum Aufbringen der Pulverschichten (25).

14. Verfahren zum Herstellen einer Schicht eines dreidimensionalen Bauteils (21) durch Bestrahlen einer Pulverschicht (25) mittels eines Hochenergiestrahls, insbesondere mittels eines Laserstrahls (3), umfassend:
Bestrahlen der Pulverschicht (25) mittels des Hochenergiestrahls in einem Bearbeitungsfeld (11) zur Herstellung der Schicht des dreidimensionalen Bauteils (21), wobei ein Strahlprofil (6, 6') des Hochenergiestrahls entlang einer ersten Richtung (X) senkrecht zur Strahlachse (Z) des Hochenergiestrahls eine Länge (L) und entlang einer zweiten Richtung (Y) senkrecht zur Strahlachse (Z) des Hochenergiestrahls eine Breite (B) aufweist, die kleiner ist als die Länge (L), und
wobei die Länge (L) und die Breite (B) des Strahlprofils (6, 6') des Hochenergiestrahls in dem Bearbeitungsfeld (11) und bevorzugt eine Ausrichtung der ersten Richtung (X) und der zweiten Richtung (Y) des Strahlprofils (6, 6') des Hochenergiestrahls in Abhängigkeit von der Position (X_{P}, Y_{P}) des Hochenergiestrahls in dem Bearbeitungsfeld (11) verändert wird,
**dadurch gekennzeichnet,**
**dass** die Länge (L) des Strahlprofils (6, 6') des Hochenergiestrahls in dem Bearbeitungsfeld (11) mittels mindestens eines ersten einstellbaren Strahlteleskops (9) und die Breite (B) des Strahlprofils (6, 6') des Hochenergiestrahls in dem Bearbeitungsfeld (11) mittels mindestens eines zweiten einstellbaren Strahlteleskops (9) unabhängig von der Länge (L) des Strahlprofils (6, 6') des Hochenergiestrahls verändert wird.

15. Verfahren nach Anspruch 14, bei dem die Pulverschicht (25) in mindestens einem ersten Teilbereich (T₁ₐ, ..., T_{1d}) mit einem Strahlprofil (6, 6') bestrahlt wird, dessen Länge (L) größer ist als dessen Breite (B) und bei dem die Pulverschicht (25) in mindestens einem zweiten Teilbereich (T₂) mit einem Strahlprofil (6, 6') bestrahlt wird, dessen Länge (L) und Breite (B) übereinstimmen.

## Claims

1. Irradiation device (1) for a processing machine (20) for producing three-dimensional components (21) by irradiating powder layers (25) by means of a high-energy beam, in particular by means of a laser beam (3), the irradiation device (1) comprising:
a beam-forming device (14) for forming a beam profile (6, 6') of the high-energy beam, which profile has a length (L) in a first direction (X) that is perpendicular to the beam axis (Z) of the high-energy beam and a width (B) in a second direction (Y) that is perpendicular to the beam axis (Z) of the high-energy beam, which width is smaller than the length (L), and
a scanner device (15) for aligning the high-energy beam with a position (X_{P}, Y_{P}) in a processing field (11) of the scanner device (15) for irradiating a powder layer (25) by means of the high-energy beam, the irradiation device (1) being designed to modify the length (L) and/or the width (B) of the beam profile (6, 6') of the high-energy beam in the processing field (11) depending on the position (X_{P}, Y_{P}) of the high-energy beam in the processing field (11),
**characterized in that**
the beam-forming device (14) comprises at least one first adjustable beam telescope (9) for modifying the length (L) of the beam profile (6, 6') and at least one second adjustable beam telescope (12) for modifying the width (B) of the beam profile (6, 6') independently of the length (L) of the beam profile (6, 6').

2. Irradiation device according to claim 1, wherein at least one first and/or at least one second beam telescope (9, 12) comprises at least one lens, preferably a cylindrical lens (10b, 13a, 13b), which can be moved in the direction of the beam axis (Z) of the high-energy beam.

3. Irradiation device according to either claim 1 or claim 2, wherein the beam-forming device (14) is designed to form a beam profile (6, 6') of the high-energy beam, of which the length (L) and the width (B) coincide.

4. Irradiation device according to any of the preceding claims, which is designed to modify the alignment of the first direction (X) and of the second direction (Y) of the beam profile (6, 6') in a plane (XY) that is perpendicular to the beam axis (Z) of the high-energy beam depending on the position (X_{P}, Y_{P}) of the high-energy beam in the processing field (11).

5. Irradiation device according to claim 4, which is designed to rotate the beam profile (6, 6') of the high-energy beam about the beam axis (Z) of the high-energy beam.

6. Irradiation device according to claim 5, wherein the at least one first and/or second beam telescope (9, 12) is/are mounted for rotation about the beam axis (Z) of the high-energy beam and wherein the irradiation device (1) comprises at least one drive (17) for rotating the at least one first and/or second beam telescope (9, 12) about the beam axis (Z).

7. Irradiation device according to any of the preceding claims, further comprising a collimation device (4), arranged in the beam path of the high-energy beam in front of the at least one first and second beam telescopes (9, 12), for collimating the high-energy beam.

8. Irradiation device according to any of the preceding claims, wherein the beam-forming device (14) comprises at least one additional optical element (19, 7) for further forming the beam profile (6, 6').

9. Irradiation device according to any of the preceding claims, further comprising an objective lens (24) for focusing the high-energy beam when aligned with the position (X_{P}, Y_{P}) in the processing field (11).

10. Irradiation device according to any of the preceding claims, further comprising a beam source, in particular a laser source (2), for generating the high-energy beam.

11. Irradiation device according to any of the preceding claims, further comprising a control device (16) which is designed to actuate the beam-forming device (14) for controlling the length (L) and/or the width (B) of the beam profile (6, 6') and preferably the alignment of the first direction (X) and of the second direction (Y) of the beam profile (6, 6') depending on the position (X_{P}, Y_{P}) of the high-energy beam in the processing field (11).

12. Irradiation device according to claim 11, wherein the control device (16) is designed to actuate the beam-forming device (14), to irradiate at least one first portion (T₁ₐ, ..., T_{1d}) of the processing field (11), which portion is to be irradiated by means of the high-energy beam in order to produce a layer of the three-dimensional component (21), with a beam profile (6, 6') of which the length (L) is greater than its width (B), and to irradiate at least one second portion (T₂) of the processing field (11), which portion is to be irradiated by means of the high-energy beam in order to produce the same layer of the three-dimensional component (21), with a beam profile (6, 6') of which the length (L) and width (B) coincide.

13. Processing machine (20) for producing three-dimensional components (21) by irradiating powder layers (25) by means of a high-energy beam, in particular by means of a laser beam (3), comprising an irradiation device (1) according to any of the preceding claims, and a processing chamber (27) having a carrier (26) on which to apply the powder layers (25).

14. Method for producing a layer of a three-dimensional component (21) by irradiating a powder layer (25) by means of a high-energy beam, in particular by means of a laser beam (3), comprising:
irradiating the powder layer (25) by means of the high-energy beam in a processing field (11) for producing the layer of the three-dimensional component (21), a beam profile (6, 6') of the high-energy beam having a length (L) in a first direction (X) that is perpendicular to the beam axis (Z) of the high-energy beam and a width (B) in a second direction (Y) that is perpendicular to the beam axis (Z) of the high-energy beam, which width is smaller than the length (L), and the length (L) and the width (B) of the beam profile (6, 6') of the high-energy beam in the processing field (11) and preferably an orientation of the first direction (X) and of the second direction (Y) of the beam profile (6, 6') of the high-energy beam being modified depending on the position (X_{P}, Y_{P}) of the high-energy beam in the processing field (11),
**characterized in that**
the length (L) of the beam profile (6, 6') of the high-energy beam in the processing field (11) is modified by means of at least one first adjustable beam telescope (9) and the width (B) of the beam profile (6, 6') of the high-energy beam in the processing field (11) is modified by means of at least one second adjustable beam telescope (9) independently of the length (L) of the beam profile (6, 6') of the high-energy beam.

15. Method according to claim 14, wherein the powder layer (25) is irradiated in at least one first portion (T₁ₐ, ..., T_{1d}) with a beam profile (6, 6') of which the length (L) is greater than its width (B), and wherein the powder layer (25) is irradiated in at least one second portion (T₂) with a beam profile (6, 6') of which the length (L) and width (B) coincide.

## Revendications

1. Dispositif d'irradiation (1) pour une machine d'usinage (20) destinée à la production de composants tridimensionnels (21) par irradiation de couches de poudre (25) au moyen d'un faisceau à haute énergie, en particulier au moyen d'un faisceau laser (3), le dispositif d'irradiation (1) comprenant :
un dispositif de mise en forme de faisceau (14) pour mettre en forme un profil de faisceau (6, 6') du faisceau à haute énergie, lequel présente une longueur (L) dans une première direction (X) perpendiculaire à l'axe de faisceau (Z) du faisceau à haute énergie et une largeur (B), qui est inférieure à la longueur (L), dans une deuxième direction (Y) perpendiculaire à l'axe de faisceau (Z) du faisceau à haute énergie et
un dispositif de balayage (15) pour orienter le faisceau à haute énergie sur une position (X_{P}, Y_{P}) dans un champ d'usinage (11) du dispositif de balayage (15) pour irradier une couche de poudre (25) au moyen du faisceau à haute énergie, le dispositif d'irradiation (1) étant conçu pour modifier la longueur (L) et/ou la largeur (B) du profil de faisceau (6, 6') du faisceau à haute énergie dans le champ d'usinage (11) en fonction de la position (X_{P}, Y_{P}) du faisceau à haute énergie dans le champ d'usinage (11),
**caractérisé en ce**
**que** le dispositif de mise en forme de faisceau (14) présente au moins un premier télescope de faisceau réglable (9) pour modifier la longueur (L) du profil de faisceau (6, 6') et au moins un deuxième télescope de faisceau réglable (12) pour modifier la largeur (B) du profil de faisceau (6, 6') indépendamment de la longueur (L) du profil de faisceau (6, 6').

2. Dispositif d'irradiation selon la revendication 1, dans lequel au moins un premier et/ou au moins un deuxième télescope de faisceau (9, 12) présente au moins une lentille, de préférence une lentille cylindrique (10b, 13a, 13b), déplaçable dans la direction de l'axe de faisceau (Z) du faisceau à haute énergie.

3. Dispositif d'irradiation selon la revendication 1 ou 2, dans lequel le dispositif de mise en forme de faisceau (14) est conçu pour mettre en forme un profil de faisceau (6, 6') du faisceau à haute énergie dont la longueur (L) et la largeur (B) coïncident.

4. Dispositif d'irradiation selon l'une des revendications précédentes, lequel est conçu pour modifier l'orientation de la première direction (X) et de la deuxième direction (Y) du profil de faisceau (6, 6') dans un plan (XY) perpendiculaire à l'axe de faisceau (Z) du faisceau à haute énergie en fonction de la position (X_{P}, Y_{P}) du faisceau à haute énergie dans le champ d'usinage (11).

5. Dispositif d'irradiation selon la revendication 4, lequel est conçu pour faire tourner le profil de faisceau (6, 6') du faisceau à haute énergie autour de l'axe de faisceau (Z) du faisceau à haute énergie.

6. Dispositif d'irradiation selon la revendication 5, dans lequel ledit au moins un premier et/ou deuxième télescope de faisceau (9, 12) est monté rotatif autour de l'axe de faisceau (Z) du faisceau à haute énergie et dans lequel le dispositif d'irradiation (1) présente au moins un entraînement (17) pour faire tourner ledit au moins un premier et/ou deuxième télescope de faisceau (9, 12) autour de l'axe de faisceau (Z).

7. Dispositif d'irradiation selon l'une des revendications précédentes, comprenant en outre : un dispositif de collimation (4) disposé devant ledit au moins un premier et deuxième télescope de faisceau (9, 12) dans le trajet de faisceau du faisceau à haute énergie pour collimater le faisceau à haute énergie.

8. Dispositif d'irradiation selon l'une des revendications précédentes, dans lequel le dispositif de mise en forme de faisceau (14) présente au moins un autre élément optique (19, 7) pour une mise en forme supplémentaire du profil de faisceau (6, 6').

9. Dispositif d'irradiation selon l'une des revendications précédentes, comprenant en outre : un objectif (24) pour focaliser le faisceau à haute énergie lorsqu'il est orienté sur la position (X_{P}, Y_{P}) dans le champ d'usinage (11).

10. Dispositif d'irradiation selon l'une des revendications précédentes, comprenant en outre : une source de faisceau, en particulier une source laser (2), pour générer le faisceau à haute énergie.

11. Dispositif d'irradiation selon l'une des revendications précédentes, comprenant en outre : un dispositif de commande (16) qui est conçu pour commander le dispositif de mise en forme de faisceau (14) afin de commander la longueur (L) et/ou la largeur (B) du profil de faisceau (6, 6') et de préférence l'orientation de la première direction (X) et de la deuxième direction (Y) du profil de faisceau (6, 6') en fonction de la position (X_{P}, Y_{P}) du faisceau à haute énergie dans le champ d'usinage (11).

12. Dispositif d'irradiation selon la revendication 11, dans lequel le dispositif de commande (16) est conçu pour commander le dispositif de mise en forme de faisceau (14) afin d'irradier au moins une première zone partielle (T₁ₐ, ...., T_{1d}) du champ d'usinage (11) au moyen du faisceau à haute énergie pour produire une couche du composant tridimensionnel (21) avec un profil de faisceau (6, 6') dont la longueur (L) est supérieure à sa largeur (B), et d'irradier au moins une deuxième zone partielle (T₂) du champ d'usinage (11) à irradier au moyen du faisceau à haute énergie pour produire la même couche du composant tridimensionnel (21) avec un profil de faisceau (6, 6') dont la longueur (L) et la largeur (B) coïncident.

13. Machine d'usinage (20) destinée à la production de composants tridimensionnels (21) par irradiation de couches de poudre (25) au moyen d'un faisceau à haute énergie, en particulier au moyen d'un faisceau laser (3), comprenant :
un dispositif d'irradiation (1) selon l'une des revendications précédentes et une chambre d'usinage (27) avec un support (26) pour appliquer les couches de poudre (25).

14. Procédé de production d'une couche d'un composant tridimensionnel (21) par irradiation d'une couche de poudre (25) au moyen d'un faisceau à haute énergie, en particulier au moyen d'un faisceau laser (3), comprenant les étapes consistant à :
irradier la couche de poudre (25) au moyen du faisceau à haute énergie dans un champ d'usinage (11) pour produire la couche du composant tridimensionnel (21),
dans lequel un profil de faisceau (6, 6') du faisceau à haute énergie présente une longueur (L) dans une première direction (X) perpendiculaire à l'axe de faisceau (Z) du faisceau à haute énergie et une largeur (B), qui est inférieure à la longueur (L), dans une deuxième direction (Y) perpendiculaire à l'axe de faisceau (Z) du faisceau à haute énergie, et dans lequel la longueur (L) et la largeur (B) du profil de faisceau (6, 6') du faisceau à haute énergie dans le champ d'usinage (11) et de préférence une orientation de la première direction (X) et la deuxième direction (Y) du profil de faisceau (6, 6') sont modifiées en fonction de la position (Xp, Yp) du faisceau à haute énergie dans le champ d'usinage (11),
**caractérisé en ce**
**que** la longueur (L) du profil de faisceau (6, 6') du faisceau à haute énergie dans le champ d'usinage (11) est modifiée au moyen d'au moins un premier télescope de faisceau réglable (9) et la largeur (B) du profil de faisceau (6, 6') du faisceau à haute énergie dans le champ d'usinage (11) est modifiée au moyen d'au moins un deuxième télescope de faisceau réglable (9) indépendamment de la longueur (L) du profil de faisceau (6, 6') du faisceau à haute énergie.

15. Procédé selon la revendication 14, dans lequel la couche de poudre (25) est irradiée dans au moins une première zone partielle (T₁ₐ, ..., T_{1d}) avec un profil de faisceau (6, 6') dont la longueur (L) est supérieure à sa largeur (B) et dans lequel la couche de poudre (25) est irradiée dans au moins une deuxième zone partielle (T₂) avec un profil de faisceau (6, 6') dont la longueur (L) et la largeur (B) coïncident.
